(19) **Europäisches Patentamt**
**European Patent Office**
**Office européen des brevets**

(11) **EP 4 192 163 A1**

(12) **EUROPEAN PATENT APPLICATION**
published in accordance with Art. 153(4) EPC

(43) Date of publication:
07.06.2023 Bulletin 2023/23

(51) International Patent Classification (IPC):
$H04W\ 72/04$ (2023.01)      $H04W\ 72/12$ (2023.01)
$H04L\ 5/00$ (2006.01)

(21) Application number: 21851256.4

(22) Date of filing: 16.07.2021

(52) Cooperative Patent Classification (CPC):
H04L 5/00; H04W 72/04; H04W 72/12

(86) International application number:
PCT/CN2021/106846

(87) International publication number:
WO 2022/022302 (03.02.2022 Gazette 2022/05)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.07.2020 CN 202010734682

(71) Applicant: Datang Mobile Communications
Equipment Co., Ltd.
Beijing 100085 (CN)

(72) Inventor: WANG, Junwei
Beijing 100085 (CN)

(74) Representative: Körfer, Thomas
Mitscherlich PartmbB
Patent- und Rechtsanwälte
Sonnenstrasse 33
80331 München (DE)

(54) **DATA TRANSMISSION TIME DOMAIN PARAMETER INDICATION METHOD, UE, AND BASE STATION**

(57) Disclosed in the present disclosure are a data transmission time domain parameter indication method, a user equipment (UE), and a base station, comprising: indicating, by means of indication information carried in downlink control information (DCI), whether scheduling data of the UE comprises a beam switching time interval GAP, or making an agreement with the UE to determine, by means of a scheduling condition, whether the scheduling data comprises the GAP; when it is determined that the GAP is comprised, determining the GAP according to a UE switching capability parameter agreed upon by an interface protocol; and transmitting the scheduling data on a beam after the GAP. By using the method provided in the present disclosure, in high-frequency scheduling design, the effect on the protocol can be reduced, and the implementation complexity of the UE and the base station can be reduced.

S1301

Indicating to a UE whether scheduled data includes a beam switching time interval GAP through indication information carried in DCI, or making an agreement with the UE to determine whether the scheduled data includes the GAP through a scheduling condition

S1302

Determining the GAP according to a UE switching capability parameter agreed by an interface protocol when determining that the GAP is included

S1303

Transmitting valid scheduled data on a beam after the GAP

FIG. 13

**Description**

**Cross-Reference of Related Applications**

This application claims priority to Chinese Patent Application No. 202010734682.4, filed with the China National Intellectual Property Administration on July 27, 2020 and entitled "Data Transmission Time Domain Parameter Indication Method, UE, and Base Station", which is hereby incorporated by reference in its entirety.

**Field**

The disclosure relates to the field of communication technologies, and particularly to a method, UE and base station for time-domain parameter indication of data transmission.

**Background**

With the development of wireless communication, people's demand for mobile communication is getting higher and higher, especially in terms of communication bandwidth and communication rate. It is expected to reach a rate of G-bit level. In order to meet the people's demand for high communication rate, it is necessary to develop the spectrum with a larger bandwidth. In the current 5G New Radio (NR) technology, mobile phones and base stations have been supported to communicate on two Frequency Ranges (FRs), where the FR1 is 410MHz to 7.125GHz, and the FR2 is 24.25GHz to 52.6GHz.

The current 3rd Generation Partnership Project (3GPP) standard has begun to study mobile wireless communication on the frequency band of 52.6GHz to 71GHz. The higher communication frequency can bring the greater bandwidth advantage but bring greater challenges to the wireless communication design. Mainly, the higher frequency has a greater Doppler frequency deviation, and at the same time, the greater phase noise is also generated. In order to address the effect of Doppler and phase noise caused by the high frequency, a higher Sub-Carrier Spacing (SCS) is used. In order to solve the problem of large attenuation of high-frequency transmission, the beam sending technology may be used.

When the base station selects a suitable beam for communication, beam switching may be involved. During the beam switching, the transceiver can neither receive nor send signals, that is, the phenomenon of beam switching gap occurs. When the SCS is relatively small, the beam switching may be performed during the CP. When the SCS is relatively large, the CP length is shorter than the beam switching time, so symbols need to be reserved for beam switching.

In order to solve this problem, the following solution is currently adopted.

The above negotiation is realized based on scheduling by the base station, that is, when the base station sends data scheduling, the start position and the quantity of pieces of the scheduling data are determined according to whether beam switching is required.

According to the content of the data time-domain indication in advance, the possible content of the data time-domain indication corresponding to different beam switching GAP (beam switching time interval) values (for example, some UEs support 1-symbol switching GAP, and some UEs support 2-symbol switching GAP) and switching positions is considered. After the content is encoded, the encoded bits are used for indication.

In this way, with the increase of the content of the data time-domain indication, more scenarios need to be considered, resulting in complexity of protocol update and poor compatibility of the protocol.

**Summary**

The disclosure provides a method, UE and base station for time-domain parameter indication of data transmission, to solve the problem of high complexity in protocol negotiation of the beam switching position and poor compatibility with existing protocols during beam switching with a higher SCS.

In a first aspect, the disclosure provides a method for time-domain parameter indication of data transmission, which is applied to a base station and includes: indicating to a User Equipment (UE) whether scheduled data includes a beam switching time interval GAP through indication information carried in Downlink Control Information (DCI), or making an agreement with the UE to determine whether the scheduled data includes the GAP through a scheduling condition; determining the GAP according to a UE switching capability parameter agreed by an interface protocol when determining that the GAP is included; transmitting the scheduled data on a beam after the GAP.

Optionally, when the agreement is made with the UE to determine whether the scheduled data includes the GAP through the scheduling condition, then it is determined that the scheduled data does not include the GAP when any of following scheduling conditions is met: a delay between a start symbol of the scheduled data indicated by DCI scheduling and a last symbol of a Physical Downlink Control Channel (PDCCH) of the DCI is less than a preset threshold;

a length of scheduled Physical Downlink Shared Channel (PDSCH) or Physical Uplink Shared Channel (PUSCH) data is less than a preset length; a start position of the scheduled data is at a Synchronization Signal (SS) or a Physical Broadcast Channel (PBCH) signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the determining the GAP according to the UE switching capability parameter agreed by the interface protocol, includes: determining a quantity of symbols of the GAP according to the UE switching capability parameter agreed by the interface protocol; determining a switching position of the GAP according to switching positions corresponding to different quantities of time units defined by the interface protocol.

Optionally, the indicating to the UE whether the scheduled data includes the beam switching time interval GAP through the indication information carried in the DCI, includes: indicating whether the scheduled data includes the GAP by different values of one bit; or indicating that the scheduled data includes the GAP and a switching position of the GAP by different values of one bit; or indicating whether the scheduled data includes the GAP and a switching position of the GAP by different values of two bits.

Optionally, the scheduled data includes any one of: PDSCH data; Channel State Information Reference Signal (CSI-RS); PUSCH data.

Optionally, transmitting the scheduled data on the beam after the GAP, includes: introducing resource overhead $N_{beamGap}^{PRB}$ related to beam switching to calculate a length TBsize of a transmission block of the scheduled data when transmitting the scheduled data on the beam after the GAP.

Optionally, the introducing the resource overhead $N_{beamGap}^{PRB}$ related to beam switching, includes: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the introducing the resource overhead $N_{beamGap}^{PRB}$ related to beam switching, includes: determining that $N_{beamGap}^{PRB}$ is 0 when the quantity of symbols of the scheduled data is less than a preset low threshold or greater than a preset high threshold, where the preset high threshold is greater than the preset low threshold.

In a second aspect, the disclosure provides a method for time-domain parameter indication of data transmission, which is applied to a UE and includes: determining whether scheduled data includes a beam switching time interval GAP through indication information carried in received DCI or through a scheduling condition; determining the GAP according to a UE switching capability parameter agreed by an interface protocol when determining that the GAP is included; transmitting the scheduled data on a beam after the GAP.

Optionally, when it is determined whether the scheduled data includes the GAP through the scheduling condition agreed with the base station, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the determining the GAP according to the UE switching capability parameter agreed by the interface protocol, includes: determining a quantity of symbols of the GAP according to the UE switching capability parameter agreed by the interface protocol; determining a switching position of the GAP according to switching positions corresponding to different quantities of time units defined by the interface protocol.

Optionally, the determining whether the scheduled data includes the GAP through the indication information carried in the received DCI, includes: determining whether the scheduled data includes the GAP through different values of one bit carried in the DCI; or determining whether the scheduled data includes the GAP and a switching position of the GAP through different values of one bit carried in the DCI; or determining whether the scheduled data includes the GAP and a switching position of the GAP through different values of two bits carried in the DCI.

Optionally, the scheduled data includes any one of PDSCH data; CSI-RS; PUSCH data.

Optionally, transmitting the scheduled data after beam switching in the GAP, includes: introducing resource overhead $N_{beamGap}^{PRB}$ related to beam switching to calculate a length TBsize of a transmission block of the scheduled data when transmitting the scheduled data on the beam after the GAP.

Optionally, the introducing the resource overhead $N_{beamGap}^{PRB}$ related to beam switching, includes: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the introducing the resource overhead $N_{beamGap}^{PRB}$ related to beam switching, includes: determining that $N_{beamGap}^{PRB}$ is 0 when the quantity of symbols of the scheduled data is less than a preset low threshold or greater than a preset high threshold, where the preset high threshold is greater than the preset low threshold.

In a third aspect, the disclosure provides a base station for time-domain parameter indication of data transmission, including a memory and a processor, where: the memory is configured to store a computer program; the processor is configured to read the program in the memory and perform following steps: indicating to a UE whether scheduled data includes a beam switching time interval GAP through indication information carried in DCI, or making an agreement with the UE to determine whether the scheduled data includes the GAP through a scheduling condition; determining the GAP according to a UE switching capability parameter agreed by an interface protocol when determining that the GAP is included; transmitting the scheduled data on a beam after the GAP.

Optionally, when the processor makes the agreement with the UE to determine whether the scheduled data includes the GAP through the scheduling condition, then the processor determines that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the processor determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the processor indicates to the UE whether the scheduled data includes the beam switching time interval GAP through the indication information carried in the DCI by: indicating whether the scheduled data includes the GAP by different values of one bit; or indicating that the scheduled data includes the GAP and a switching position of the GAP by different values of one bit; or indicating whether the scheduled data includes the GAP and a switching position of the GAP by different values of two bits.

Optionally, the scheduled data includes any one of: PDSCH data; CSI-RS; PUSCH data.

Optionally, the processor transmits the scheduled data on the beam after the GAP by: introducing resource overhead $N_{beamGap}^{PRB}$ related to beam switching to calculate a length TBsize of a transmission block of the scheduled data when transmitting the scheduled data on the beam after the GAP.

Optionally, the processor introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the processor introduces the resource overhead $N_{beamGap}^{PRB}$ related to beam switching by: determining that $N_{beamGap}^{PRB}$ is 0 when the quantity of symbols of the scheduled data is less than a preset low threshold or greater than a preset high threshold, where the preset high threshold is greater than the preset low threshold.

In a fourth aspect, the disclosure provides a UE for time-domain parameter indication of data transmission, including a memory and a processor, where: the memory is configured to store a computer program; the processor is configured to read the program in the memory and perform following steps: determining whether scheduled data includes a beam switching time interval GAP through indication information carried in received DCI or through a scheduling condition; determining the GAP according to a UE switching capability parameter agreed by an interface protocol when determining that the GAP is included; transmitting the scheduled data on a beam after the GAP.

Optionally, when the processor determines whether the scheduled data includes the GAP through the scheduling condition agreed with a base station, then the processor determines that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the processor determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the processor determines whether the scheduled data includes the GAP through the indication information carried in the received DCI by: determining whether the scheduled data includes the GAP through different values of one bit carried in the DCI; or determining whether the scheduled data includes the GAP and a switching position of the GAP through different values of one bit carried in the DCI; or determining whether the scheduled data includes the GAP and a switching position of the GAP through different values of two bits carried in the DCI.

Optionally, the scheduled data includes any one of: PDSCH data; CSI-RS; PUSCH data.

Optionally, the processor transmits the scheduled data after beam switching in the GAP by: introducing resource overhead $N_{beamGap}^{PRB}$ related to beam switching to calculate a length TBsize of a transmission block of the scheduled data when transmitting the scheduled data on the beam after the GAP.

Optionally, the processor introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the processor introduces the resource overhead $N_{beamGap}^{PRB}$ related to beam switching by: determining that $N_{beamGap}^{PRB}$ is 0 when the quantity of symbols of the scheduled data is less than a preset low threshold or greater than a preset high threshold, where the preset high threshold is greater than the preset low threshold.

In a fifth aspect, the disclosure provides a base station for time-domain parameter indication of data transmission, including: an indication determining unit configured to indicate to a UE whether scheduled data includes a beam switching time interval GAP through indication information carried in DCI, or make an agreement with the UE to determine whether the scheduled data includes the GAP through a scheduling condition; a GAP determining unit configured to determine the GAP according to a UE switching capability parameter agreed by an interface protocol when determining that the GAP is included; a data transmission unit configured to transmit the scheduled data on a beam after the GAP.

Optionally, when the indication determining unit makes the agreement with the UE to determine whether the scheduled data includes the GAP through the scheduling condition, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the indication determining unit determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the indication determining unit indicates to the UE whether the scheduled data includes the beam switching time interval GAP through the indication information carried in the DCI by: indicating whether the scheduled data includes the GAP by different values of one bit; or indicating that the scheduled data includes the GAP and a switching position of the GAP by different values of one bit; or indicating whether the scheduled data includes the GAP and a switching position of the GAP by different values of two bits.

Optionally, the scheduled data includes any one of: PDSCH data; CSI-RS; PUSCH data.

Optionally, the data transmission unit transmits the scheduled data on the beam after the GAP by: introducing resource overhead $N_{beamGap}^{PRB}$ related to beam switching to calculate a length TBsize of a transmission block of the scheduled data when transmitting the scheduled data on the beam after the GAP.

Optionally, the data transmission unit introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the data transmission unit introduces the resource overhead $N_{beamGap}^{PRB}$ related to beam switching by: determining that $N_{beamGap}^{PRB}$ is 0 when the quantity of symbols of the scheduled data is less than a preset low threshold or greater than a preset high threshold, where the preset high threshold is greater than the preset low threshold.

In a sixth aspect, the disclosure provides a UE for time-domain parameter indication of data transmission, including: a receiving and determining unit configured to determine whether scheduled data includes a beam switching time interval GAP through indication information carried in received DCI or through a scheduling condition; a determining unit configured to determine the GAP according to a UE switching capability parameter agreed by an interface protocol when determining that the GAP is included; a transmission unit configured to transmit the scheduled data on a beam after the GAP.

Optionally, when the receiving and determining unit determines whether the scheduled data includes the GAP through the scheduling condition agreed with the base station, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the receiving and determining unit determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the receiving and determining unit determines whether the scheduled data includes the GAP through the indication information carried in the received DCI by: determining whether the scheduled data includes the GAP through different values of one bit carried in the DCI; or determining whether the scheduled data includes the GAP and a switching position of the GAP through different values of one bit carried in the DCI; or determining whether the scheduled data includes the GAP and a switching position of the GAP through different values of two bits carried in the DCI.

Optionally, the scheduled data includes any one of: PDSCH data; CSI-RS; PUSCH data.

Optionally, the transmission unit transmits the scheduled data after beam switching in the GAP by: introducing resource overhead $N_{beamGap}^{PRB}$ related to beam switching to calculate a length TBsize of a transmission block of the scheduled data when transmitting the scheduled data on the beam after the GAP.

Optionally, the transmission unit introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the transmission unit introduces the resource overhead $N_{beamGap}^{PRB}$ related to beam switching and is further configured to: determine that $N_{beamGap}^{PRB}$ is 0 when the quantity of symbols of the scheduled data is less than a preset low threshold or greater than a preset high threshold, where the preset high threshold is greater than the preset low threshold.

In a seventh aspect, the disclosure provides a computer program medium storing a computer program thereon, where the program, when executed by a processor, implements the steps for time-domain parameter indication of data transmission as provided in the above first aspect; or the program, when executed by a processor, implements the steps for time-domain parameter indication of data transmission as provided in the above second aspect.

In an eighth aspect, the disclosure provides a chip, which is coupled to a memory in a device, so that the chip invokes program instructions stored in the memory when running, to implement the above various aspects of embodiments of the disclosure and any possible method involved in the various aspects.

In a ninth aspect, the disclosure provides a computer program product which, when running on an electronic device, causes an electronic device to implement the above various aspects of embodiments of the disclosure and any possible method involved in the various aspects.

The method, UE and base station for time-domain parameter indication of data transmission provided in the disclosure have the following beneficial effects.

The method of DCI indication or scheduling condition determination is used to determine whether the data scheduling includes the beam switching time interval GAP, and the network device and the UE determine the corresponding GAP according to the UE capability switching parameter when determining the GAP, to reduce the impact on the protocol and reduce the implementation complexity of the UE and the base station in the high-frequency scheduling design.

**Brief Description of the Drawings**

FIG. 1 is a schematic diagram of time-domain information indication for scheduling a PDSCH;

FIG. 2 is a schematic diagram of comparison of scenarios with and without a switching GAP;

FIG. 3 is a schematic diagram of calculation steps of the TB size in the related art;

FIG. 4 is a schematic diagram of comparison of the required data time-domain indication content with and without a switching GAP;

FIG. 5 is a system for time-domain parameter indication of data transmission according to an embodiment of the disclosure;

FIG. 6 is a flow chart of an Implementation 1 of the time-domain parameter indication of data transmission;

FIG. 7 is a schematic diagram of symbols of beam switching;

FIG. 8 is a schematic diagram of two scenarios in which no beam switching GAP is included in the scheduled data;

FIG. 9 is a schematic diagram of a third scenario in which no beam switching GAP is included in the scheduled data;

FIG. 10 is a schematic diagram of a fourth scenario in which no beam switching GAP is included in the scheduled data;

FIG. 11 is a flow chart of an Implementation 3 of the time-domain parameter indication of data transmission;

FIG. 12 is a schematic diagram of symbols of beam switching;

FIG. 13 is a flow chart of a method for time-domain parameter indication of data transmission at the base station side according to an embodiment of the disclosure;

FIG. 14 is a flow chart of a method for time-domain parameter indication of data transmission at the UE side according to an embodiment of the disclosure;
FIG. 15 is a schematic diagram of a base station for time-domain parameter indication of data transmission according to an embodiment of the disclosure;
FIG. 16 is a schematic diagram of a UE for time-domain parameter indication of data transmission according to an embodiment of the disclosure;
FIG. 17 is a schematic diagram of a base station for time-domain parameter indication of data transmission according to an embodiment of the disclosure;
FIG. 18 is a schematic diagram of a UE for time-domain parameter indication of data transmission according to an embodiment of the disclosure.

## Detailed Description of Embodiments

Technical solutions in embodiments of the disclosure will be described clearly and completely below in combination with accompanying drawings in embodiments of the disclosure. Obviously the described embodiments are only a part of embodiments of the disclosure but not all embodiments. Based upon embodiments in the disclosure, all of other embodiments obtained by those ordinary skilled in the art without creative work pertain to the protection scope of the disclosure.

In order to address the effect of Doppler and phase noise caused by the high frequency, a higher SCS (Sub-Carrier Spacing) is used. As the SCS increases, the quantity of OFDM (Orthogonal Frequency Division Multiplexing) symbols is decreased, and the CP length thereof also becomes smaller. The relationship between CP length and SCS is shown in Table 1:

Table 1: Relationship between CP length and SCS

| u | SCS ( Hz ) | CP length (us) | CP (length ns) |
|---|---|---|---|
| 3 | 120K | 0.59 | 586 |
| 4 | 240K | 0.29 | 293 |
| 5 | 480K | 0.15 | 146 |
| 6 | 960K | 0.07 | 73 |

In the communication process, when the beam needs to be switched, the transceiver can neither send nor receive signals. This switching time is called switching GAP (beam switching GAP). The size of the beam switching GAP (call GAPping) depends on the capability of the device, but the switching GAPs of most devices are generally between 150 nanoseconds and 200 nanoseconds. That is to say, when the SCS reaches 480KHz or 960KHz, the switching GAP is needed.

The base station and the UE need to negotiate a consensus to determine whether beam switching is required for a certain data or signal transmission, such as PDSCH (Physical Downlink Shared Channel) transmission, and the time point for beam switching.

At the same time, in the actual data communication, a certain data transmission such as PDSCH may not require beam switching, for example, before the PDSCH data sending or receiving moment.

Sending end: when sending other data or signal, the beam direction has been adjusted and does not need to be adjusted again.

Receiving end: when receiving other data or signal, the beam direction has been adjusted and does not need to be adjusted again.

At present, one of the existing technical solutions is to realize the time-domain parameter indication of data transmission based on scheduling by the base station, that is, when the base station sends data scheduling, the start position and length of the scheduled data are determined according to whether beam switching is required.

In the following, the existing solution for beam switching will be described in conjunction with scheduling a PDSCH.

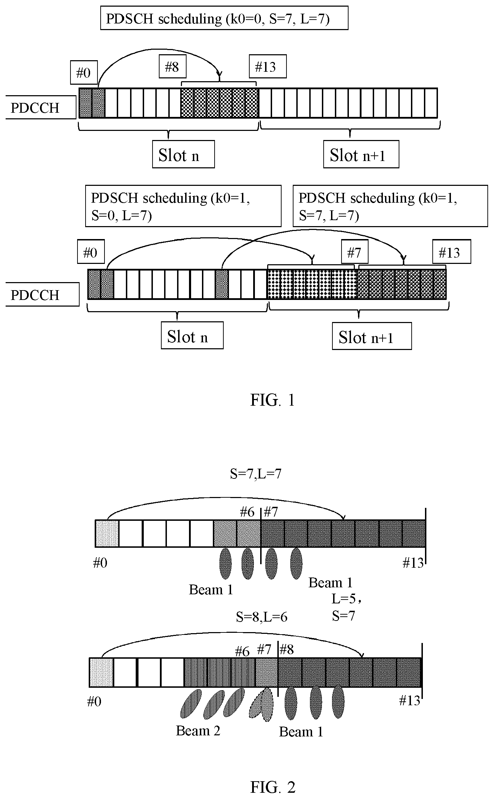

As shown in FIG. 1, which is a schematic diagram of the indication information of the time-domain information for scheduling a PDSCH, the DCI (Downlink Control Information) information carried on a PDCCH (Physical Downlink Control Channel) includes the time-domain information indication of the PDSCH, to indicate that the time-domain information of the PDSCH mainly includes 3 pieces of information content.

(1) The slot offset k0 relative to the slot where the PDCCH is located, where k0=0 represents that the PDSCH is in the same slot as the PDCCH.

(2) The start symbol (S) of the PDSCH is the quantity of symbols from the boundary of the slot.

(3) The length (L) of the PDSCH is the quantity of symbols of the scheduled PDSCH.

In order to reduce the scheduling overhead in the time domain, the time-domain scheduling information is generally configured in a table (PDSCH time-domain allocation table, pdsch-TimeDomainAllocationList), and each table includes: information of k0, S and L. In order to ensure the scheduling flexibility of the base station and reduce the overhead of the DCI indication, the current standard determines that 4 bits are used for indicating the time-domain information, and there are 16 possibilities in total. When the base station sends the scheduling signaling, it indicates which item in the table is to be used.

For example: the scheduling time-domain information has 3 optional items as follows: k0=0, S=7, L=7; k0=1, S=0, L=7; 0=1, S=7, L=7.

When the scheduling time-domain indication is "00", it may represent k0=0, S=7, L=7. The meaning of the representation is: the scheduled PDSCH is in the same slot as the PDCCH, the start symbol of the scheduled PDSCH is 7, and the quantity of symbols of the scheduled PDSCH is 7.

As shown in FIG. 2, it is a schematic diagram of comparison of scenarios with and without a switching GAP, where case 1 and case 2 are respectively from top to bottom.

The base station sends scheduling signaling at symbol 0 of a slot, the beam direction of the scheduled PDSCH is beam1, and candidate symbols of the PDSCH scheduling are symbols 7 to 13, that are 7 symbols in total; and at the same time, symbols before the data symbol 7 (excluding 7) have been scheduled to transmit other data or signals.

In the following, the actual scheduling of beam1 data is described by two cases.

(1) Case 1: no beam switching is required: the sending beam of the base station has been already in the direction of beam1 before symbol 7, so no additional beam switching is required when the base station continues transmitting data on beam1. At this time, the start position of the scheduled data of the PDSCH is symbol 7, and the quantity of symbols is 7.

(2) Case 2: beam switching is required: the beam2 is used for the data or signal transmitted before symbol 7, that is, if the base station wants to schedule data on beam1, a beam switching gap (switching from beam2 to beam1) is required, and the base station performs the beam switching on symbol 7. At this time, the start position of the scheduled data of the PDSCH is symbol 8, and the quantity of symbols is 6.

The calculation of the TB size (Transport Block size, i.e., length of transmission data block) in the related art will be illustrated below.

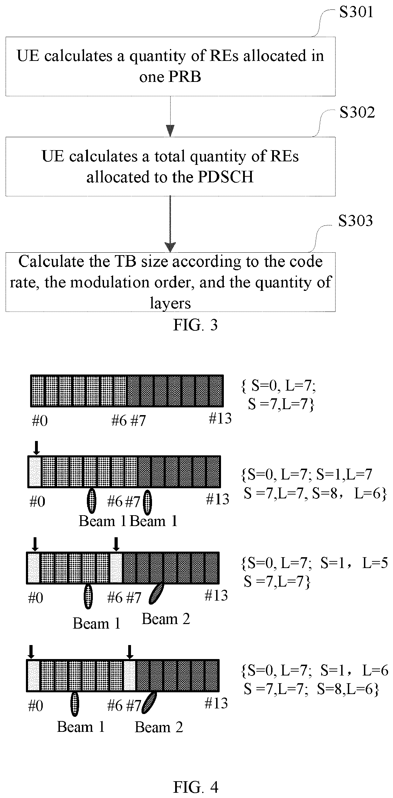

In the transmission of calculation data, the TB size parameter is not indicated through explicit signaling, but calculated through other parameters. The main parameters are: the quantity of RBs (Resource Blocks), the data time-domain information (the quantity of symbols), the adjustment of coding format, the code rate, the quantity of layers, and constants configured by high layer. The calculation process is shown in FIG. 3, including following steps.

Step S301: a UE firstly calculates a quantity of REs (Resource Elements) allocated in one PRB (Physical Resource Block).

Here, one PRB includes 12 frequency-domain units. $N_{RE}^{'} = N_{sc}^{RB} \cdot N_{symb}^{sh} - N_{DMRS}^{PRB} - N_{oh}^{PRB}$ , where: $N_{sc}^{RB} = 12$ , $N_{symb}^{sh}$ is a quantity of time-domain symbols of the PDSCH, and is indicated by the time-domain parameter of the scheduling signaling; $N_{DMRS}^{PRB}$ is the header overhead of the DMRS (Demodulation Reference Symbol), and is configured or dynamically indicated by the base station; $N_{oh}^{PRB}$ is other overhead and is configured by the base station to the UE, and this parameter is semi-statically configured.

Step S302: the UE calculates a total quantity of REs allocated to the PDSCH. $N_{RE} = \min\left(156, N_{RE}^{'}\right) \cdot n_{PRB}$ , where $n_{PRB}$ is the quantity of PRBs allocated to the PDSCH, and is indicated by the frequency-domain parameter of the scheduling signaling.

Step 303: calculate the TB size according to $N_{RE}$, the code rate, the modulation order, and the quantity of layers. For the detailed process, reference is made to the 5G standard, which will not be repeated here.

At present, the above-mentioned scheme to solve the problem of beam switching has following problems.

When designing the time-domain scheduling parameter of the PDSCH or PUSCH (Physical Uplink Shared Channel), it is necessary to consider the factor of the switching beam GAP of the base station or UE, resulting in the complexity of designing the time-domain scheduling parameter and the complexity involved in other protocols. Examples are as follows.

(1) It is necessary to re-design the content of the existing protocol table based on the default PDSCH or PUSCH.
(2) It is necessary to add more configuration items based on the time-domain scheduling parameter table configured by the UE.

To further illustrate the problem, it is assumed that only two PDSCH scheduling start positions and quantities are configured as an example.

The schematic diagram of comparison of the required data time-domain indication content with and without a switching GAP (scenarios with only one switching length) is as shown in FIG. 4, where cases from top to bottom are cases when there is no beam switching GAP, when there is 1 beam switching GAP, when there are 2 beams switching GAPs, and when there are 2 beams switching GAPs, respectively.

When there is no beam switching, two types of data time-domain indication content are required. When considering the beam switching GAP, the content needs to be increased to 6 types.

When different UEs support different beam switching GAP values, for example, some UEs support 1-symbol switching GAP and some UEs support 2-symbol switching GAP, more scenarios need to be considered, resulting in the complexity of protocol update and the poor compatibility of the protocol.

In view of the above problems, embodiments of the disclosure provide a method, UE and base station for time-domain parameter indication of data transmission. The method of DCI explicit indication or implicit indication through a determination rule is used to determine whether a beam switching GAP is included in data scheduling, and the calculation method of the TB size is revised to achieve the purpose of reducing the impact on the protocol and reducing the implementation complexity of the UE and the base station in the high-frequency scheduling design.

Here, the method, the base station and the UE are based on the same application concept. Since the method, the base station and the UE have similar principles to solve problems, the implementations of the base station, the UE and the method may refer to each other, and the repeated description thereof will be omitted.

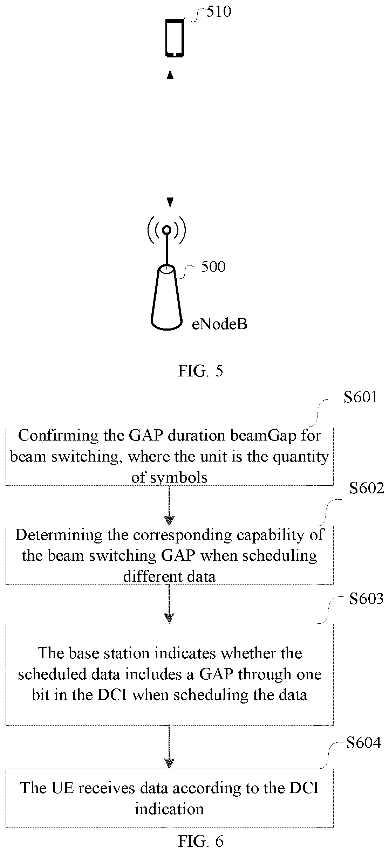

Embodiment 1: As shown in FIG. 5, an embodiment of the disclosure provides a system for time-domain parameter indication of data transmission, including: a base station 500, configured to indicate to a UE whether scheduled data includes a beam switching time interval GAP through indication information carried in DCI, or make an agreement with the UE to determine whether the scheduled data includes the GAP through a scheduling condition; determine the GAP according to a UE switching capability parameter agreed by an interface protocol when determining that the GAP is included; and transmit the scheduled data on a beam after the GAP; a UE 510, configured to determine whether scheduled data includes a beam switching time interval GAP through indication information carried in received DCI or through a scheduling condition agreed with the base station; determine the GAP according to a UE switching capability parameter agreed by an interface protocol when determining that the GAP is included; and transmit the scheduled data on a beam after the GAP.

Technical solutions provided by embodiments of the disclosure may be applicable to various systems, especially 5G systems. For example, applicable systems may be: Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE Frequency Division Duplex (FDD) system, LTE Time Division Duplex (TDD) system, Universal Mobile Telecommunication System (UMTS), Worldwide interoperability for Microwave Access (WiMAX) system, 5G system and 5G NR system, etc. These systems all include UE devices and network devices.

The user equipment UE involved in embodiments of the disclosure can refer to the device for providing the voice and/or data connectivity to the user, the handheld device with the wireless connection function, or other processing device connected to the wireless modem. In different systems, the terminal device may have different names. For example, in a 5G system, the terminal device may be referred to as User Equipment (UE). The wireless terminal device may communicate with one or more core networks via the Radio Access Network (RAN), and the wireless terminal device may be a mobile terminal, such as a mobile telephone (or called "cellular" telephone), and a computer with the mobile terminal, for example, may be a portable, pocket, handheld, computer built-in or vehicle-carried mobile device, and they exchange the voice and/or data with the radio access network. For example, Personal Communication Service (PCS) telephone, cordless telephone, Session Initiation Protocol (SIP) telephone, Wireless Local Loop (WLL) station, Personal Digital Assistant (PDA) and other devices. The wireless terminal device may also be called system, subscriber unit, subscriber station, mobile station, mobile, remote station, access point, remote terminal, access terminal, user terminal, user agent, user device, which is not limited in embodiments of the disclosure.

The base station involved in embodiments of the disclosure may include a plurality of cells. Depending on specific application scenarios, the base station may also be called access point, or may refer to the device in the access network communicating with the wireless terminal via one or more sectors over the air interface or other names. The network device may be used to perform the inter-conversion between the received air frame and Internet Protocol (IP) packet, and used as the router between the wireless terminal device and the rest of the access network, where the rest of the access network may include IP networks. The network device may further coordinate the attribute management of the air interface. For example, the network device involved in embodiments of the disclosure can be a network device (Base Transceiver Station (BTS)) in the Global System For Mobile communications (GSM) or Code Division Multiple Access (CDMA), or can be a network device (NodeB) in the Wide-band Code Division Multiple Access (WCDMA), or can be an evolutional network device (evolutional NodeB (eNB or e-NodeB)) in the Long Term Evolution (LTE) system, a 5G base station in the 5G network architecture (Next generation System), or can be a Home evolved NodeB (HeNB), a relay node, femto, pico, etc., which is not limited in embodiments of the disclosure.

In this embodiment, transmitting the scheduled data on the beam after the GAP, refers to transmitting a valid scheduled data signal. The above-mentioned "valid scheduled data signal" is illustrated as follows: generally, the base station and the terminal need to execute the beam switching process at the determined beam switching position, and the data sending or receiving is interrupted during the beam switching process; due to considering different hardware capabilities, one of the base station and the terminal may complete the beam switching process in advance but still think that the received or sent signal is invalid or bad during the actual execution process, that is, this signal cannot be considered as a valid signal or channel. The valid scheduled data signal mentioned above is a signal that meets standard requirements. In the beam switching time interval GAP, the base station does not send any signal, or the sent signal is invalid, that is, cannot be used as a valid received signal for data demodulation.

In an embodiment of the disclosure, the base station notifies the UE of whether the scheduled data includes a GAP through the DCI, or makes an agreement with the UE to determine whether the scheduled data includes a GAP through the scheduling condition. Two possible implementations will be illustrated below.

1. Determine whether the scheduled data includes a GAP through the agreed scheduling condition.

In this way, the base station and the UE use the agreed scheduling condition to determine whether the scheduled data includes the GAP, and the base station does not need to indicate through signaling.

It is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format, such as the DCI format based on format 0 in the existing NR.

If none of the above conditions is met, it is considered that the scheduled data may include a GAP, and the GAP is determined according to the UE switching capability parameter agreed in the interface protocol when determining that the GAP is included.

2. Indicate to the UE whether the scheduled data includes a GAP through the indication information carried in the DCI.

Bit information is added to the DCI of the PDCCH channel to indicate whether the time-domain information of the scheduled data includes a beam switching symbol.

This may be indicated to the UE through the indication information carried in the DCI in any of following ways.

Different values of one bit are used for indicating whether the scheduled data includes the GAP, for example, 0 indicates that the beam switching time is included, and 1 indicates that the beam switching time is not included, or vice versa.

Different values of two bits are used for indicating whether the scheduled data includes the GAP and the corresponding switching position when the GAP is included. Following methods may be used.

When 00 is used to indicate that the quantity of symbols occupied by the GAP is 2, the switching positions of the GAP are respectively located at the first symbol and the last symbol of the scheduled data in the time domain.

When 01 is used to indicate that the quantity of symbols occupied by the GAP is 1, the switching position of the GAP is located at the first symbol of the scheduled data in the time domain.

When 10 is used to indicate that the quantity of symbols occupied by the GAP is 1, the switching position of the GAP is located at the last symbol of the scheduled data in the time domain.

11 is used to indicate no beam switching.

When determining that the scheduled data includes the GAP in the above way, the UE and the base station may determine the GAP information according to the switching capability parameter of the UE when determining that the scheduled data includes the GAP. The GAP information here includes the quantity of GAP symbols and the switching position of the GAP.

The base station and the UE may determine the GAP corresponding to different UE switching capability parameters through the interface protocol. As an optional implementation, the GAP here may only include the quantity of symbols of the GAP, that is, the quantity of symbols of the GAP is determined by the UE switching capability parameter, and the switching position of the GAP is determined according to switching positions corresponding to different quantities of time units defined by the interface protocol. The quantity of time units may be the quantity of symbols or the quantity of sampling points.

As another optional implementation, when the GAP corresponding to different UE switching capability parameters is determined by the interface protocol, the GAP may also include the quantity of symbols of the GAP and the switching position of the GAP at the same time.

The UE switching capability parameter includes a UE switching capability device level related to the UE itself, and also includes at least one of subcarrier spacing, a DCI format of the scheduled data, and a transmission direction of the scheduled data.

For example, for a specific subcarrier, one or more GAP switching durations are determined as follows.

The GAP duration based on UE switching capability device level 1: when SCS=480KHz, GAP=1 symbol; when SCS=960KHz, GAP=2 symbols.

The GAP duration based on UE switching capability device level 2: when SCS=480KHz, GAP=0 symbol; when SCS=960KHz, GAP=1 symbol.

Generally, before the initial access is completed, the base station does not know the UE switching capability device level of the UE. At the same time, different UEs in a cell may also have different UE switching capability device levels. Therefore, it is necessary to distinguish application scenarios of different UE switching capability device levels.

For the initial access process, or for the reception of the paging information and system broadcast information, the capability of the beam switching GAP is the basic capability (for example: capability 1; when SCS=960KHz, a switching gap of 2 symbols is required). For the base station, when determining that the UE is not in the connected state, the lowest UE switching capability device level and data parameters related to the UE switching capability are used to determine the GAP included in the scheduled data; and for the UE, when determining that the UE is not in the connected state, the lowest UE switching capability device level and the data parameters related to the UE switching capability are used to determine the GAP included in the scheduled data.

When the UE enters the connected state, the UE reports the capability of the beam switching GAP, and the base station reconfirms the value of the beam switching capability (for example, in the connected state, the capability is 2 based on the UE's data scheduling; when SCS=960KHz, a switching gap of 1 symbol is required). For the base station, when determining that the UE enters the connected state, the base station receives the UE switching capability device level reported by the UE, and determines the GAP according to the reported UE switching capability device level and a transmission parameter of the UE switching capability. For the UE, when determining that the UE enters the connected state, the GAP is determined according to the UE switching capability device level and the transmission parameter of the UE switching capability.

As an optional implementation, in an embodiment of the disclosure, the base station and the UE transmit valid scheduled data on the beam after the GAP, including: introducing resource overhead $N_{beamGap}^{PRB}$ related to beam switching to calculate a length TBsize of a transmission block of the scheduled data when transmitting the valid scheduled data on the beam after the GAP.

The resource overhead $N_{beamGap}^{PRB}$ introduced to beam switching may be determined according to the quantity of symbols of the GAP and the quantity of symbols of the valid scheduled data, where the larger the quantity of symbols of the valid scheduled data, the smaller $N_{beamGap}^{PRB}$. The following method may be used.

When determining that the quantity of symbols of the valid scheduled data is less than a preset low threshold or greater than a preset high threshold, $N_{beamGap}^{PRB}$ is determined to be 0, where the preset high threshold is greater than the preset low threshold.

Otherwise, $N_{beamGap}^{PRB}$ is determined according to the quantity of symbols of the GAP and the quantity of symbols of the valid scheduled data, based on the rule that the larger the quantity of symbols of the valid scheduled data, the smaller $N_{beamGap}^{PRB}$. $N_{beamGap}^{PRB}$ is used to correct the quantity of REs allocated in one PRB, and the transmission data block size TBsize is calculated by using the corrected quantity of REs and related parameters.

After the UE and the base station introduce the variable $N_{beamGap}^{PRB}$, the process of calculating the transmission data block size TBsize is as follows.

The quantity $N'_{RE}$ of REs allocated in one PRB is calculated, and the process is as follows.

The quantity $N'_{RE}$ of REs allocated in one PRB is firstly calculated: $N'_{RE} = N_{sc}^{RB} \cdot N_{symb}^{sh} - N_{DMRS}^{PRB} - N_{oh}^{PRB} - N_{beamGap}^{PRB}$, where : $N_{sc}^{RB} = 12$, $N_{symb}^{sh}$ is the quantity of time-domain symbols of the PDSCH (indicated by the time-domain parameter of the scheduling signaling); $N_{DMRS}^{PRB}$ is the header overhead of the DMRS (configured or dynamically indicated by the base station); $N_{oh}^{PRB}$ is other overhead and is configured by the base station to the UE, and this parameter is semi-statically configured; $N_{beamGap}^{PRB}$ is overhead introduced due to beam switching.

The calculation of the variable $N_{beamGap}^{PRB}$ is related to beamGaP and the quantity L of symbols of the scheduled data. The instance of the relationship is as shown in Table 2:

Table 2:

| beamGaP parameter table ($N_{beamGap}^{PRB}$ value) | | |
| --- | --- | --- |
| | beamGaP=1 symbol | beamGaP=2 symbols |
| L=2 | 0 | 0 |
| L=3 | 0.72 | 1.44 |
| L=4 | 0.15 | 0.3 |
| L=5 and L=6 | 0.1 | 0.2 |
| L>7 | 0 | 0 |

When L=2, $N_{beamGap}^{PRB}$ is 0, meaning that no switching in scheduling occurs when L=2, and the main consideration is that the quantity of data symbols is relatively small.

When L=2/3/4/5/6, different values of $N_{beamGap}^{PRB}$ are calculated according to the quantity L of symbols of the scheduled data. The larger L is, the smaller $N_{beamGap}^{PRB}$ is.

When L is greater than or equal to 7, $N_{beamGap}^{PRB}$ is 0, meaning that $N_{beamGap}^{PRB}$ has negligible influence on the calculation of TB size.

Some examples are given in an embodiment of the disclosure. Of course, other data may also be configured, as long as the value representing $N_{beamGap}^{PRB}$ is related to L or beamGap. That is, when L is less than a certain threshold or greater than a certain threshold, $N_{beamGap}^{PRB}=0$. Other values are related to the quantity L, and the quantity threshold of the related L may be configured as a default value or configured by the high layer.

The above scheduled data includes any one of PDSCH data; CSI-RS; PUSCH data. Possible implementations are given below in conjunction with the specific form of the scheduled data.

Implementation 1 is as follows.

In this implementation, DCI=1 bit, the scheduled data is PDSCH, the quantity of symbols of the scheduled data is L=6, GAP=1OS, SCS=960KHz, where OS is an OFDM symbol.

As shown in FIG. 6, the process of the time-domain parameter indication of data transmission is as follows.

Step S601: confirming the GAP duration beamGap for beam switching, where the unit is the quantity of symbols.

As the SCS increases, the quantity of symbols and the length of the CP become smaller. Therefore, for a specific beam switching duration, the quantity of GAP symbols required is different. At the same time, different UEs or base stations have different capabilities, and their beamGap values are also different. In order to facilitate the operations of the base station and UE, this embodiment determines the beam switching capability table through the protocol, corresponding to different SCSs and UE switching capability device levels, as shown in Table 3.

For convenience of description, the UE switching capability device level is simply referred to as capability in this embodiment.

Table 3: GAP parameters (in the unit of symbol) for beam switching with different SCSs/different capbilities

|  | Capability 1 | Capability 2 | Capability 3 |
|---|---|---|---|
| SCS =480KHz | 1 | 0 | 0 |
| SCS=960KHz | 1 | 1 | 0 |
| SCS =1920KHz | 2 | 1 | 1 |

The content of the above table defines the quantities of symbols corresponding to different UE switching capability parameters under different SCSs. Of course, the quantities of symbols described above are only reference examples, and the value thereof may be other integers or decimals, or replaced by time unit; in order to simplify the operations of the UE and the base station, it is also possible to be simplified into one capability type and one value. For example, for all SCSs greater than 480KHz, the switching value is 1 symbol.

Step S602: determining the corresponding capability of the beam switching GAP when scheduling different data.

The default method may be used for the process of confirming the value of the duration beamGap of the beam switching GAP, for example, the UE and the base station are both based on capability 1 by default. It is also possible to report the capability to the base station after the UE enters the connected state, and the base station replies with the capability confirmed for use. The capability confirmed by the base station for use is not higher than the capability reported by the UE. If the UE reports capability 2 to the base station, the base station replies with a confirmation that the capability may be 1 or 2 but not 3.

Although the base station obtains the capability of the UE through reporting, the base station also needs to define a default capability before the capability of the UE is reported. At the same time, different UEs in a cell may also have different capabilities. Therefore, it is necessary to distinguish application scenarios of different switching capabilities.

For the initial access process, or for the reception of the paging information (such as: data scheduled by PDCCH scrambled with P-RNT) and system broadcast information (such as: data scheduled by PDCCH scrambled with SI-RNT), the capability of the beam switching GAP is the lowest capability (for example: capability 1; when SCS=1900KHz, a switching gap of 2 symbols is required).

When the UE enters the connected state, the UE reports the capability of the beam switching GAP, and the base station reconfirms the value of the beam switching capability (for example, in the connected state, the capability of the UE is 2 based on the UE's data scheduling; when SCS=960KHz, a switching gap of 1 symbol is required).

Step S603: the base station indicates whether the scheduled data includes a GAP through one bit in the DCI when scheduling the data.

The 1-bit information is added to the DCI to indicate whether the scheduled data includes a GAP.

Beam_switch_ind: 1 bit, indicating whether the scheduled data includes a beam switching GAP; for example, 0 indicates that the scheduled data includes a GAP, and 1 indicates that the scheduled data includes no GAP, or vice versa.

As described in Step S602, among the data scheduled in different DCI formats, the quantity of symbols of the GAP may be different when the scheduled data includes the GAP.

For example, when using the C-RNTI to schedule the PDSCH, ifBeam_switch_ind is 0, it means that the quantity of symbols of beam switching is 1; when using the SI-RNTI to schedule the PDSCH, if Beam_switch_ind is 0, it means that the quantity of symbols of beam switching is 2.

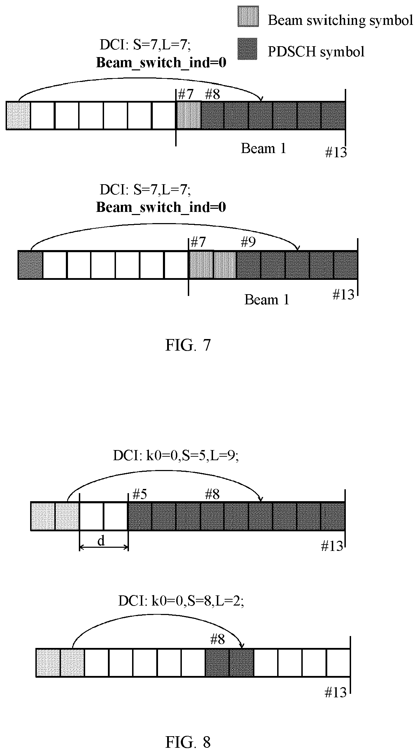

The schematic diagram of the symbols of beam switching is as shown in FIG. 7, in which case 1 and case 2 are respectively from top to bottom.

Case 1: The UE negotiates with the base station that the quantity of symbols of the beam switching GAP is 1. For the PDSCH scheduled by the PDCCH scrambled with the C-RNTI, the DCI content is: S=7, L=7, and Beam_switch_ind is 0 (indicating that length of the scheduled data includes the beam switching GAP). Then it is considered that the data sent on symbol 7 is invalid, and the valid data is from symbol 8 to symbol 13, or the data really starts from symbol 8 and ends at symbol 13.

Case 2: The UE and the base station consider by default that the quantity of symbols of the beam switching GAP is 2. For the PDSCH scheduled by the PDCCH scrambled with the SI-RNTI, the DCI content is: S=7, L=7, and Beam_switch_ind is 0 (indicating that length of the scheduled data includes the beam switching GAP). Then it is considered that the data sent on symbols 7 and 8 is invalid, and the valid data is from symbol 9 to symbol 13, or the data really starts from symbol 9 and ends at symbol 13.

Step S604: the UE receives data according to the DCI indication, as follows.

(1) Beam switching is performed according to the beam switching information.

The UE determines the beam switching position according to the indication of Beam_switch_ind, including two cases as follows.

When Beam_switch_ind=1, it means that the time-domain parameters of the scheduled data do not include the beam switching symbol, that is to say, the UE needs to complete the beam switching before scheduling the start symbol in the time domain.

When Beam_switch_ind=0, it means that the time-domain parameters of the scheduled data include the beam switching symbol, that is to say, the UE needs to complete the switching in scheduling the start symbol in the time domain.

(2) The TB size is calculated according to the beam switching information and the time-domain scheduling length.

In this embodiment, a variable $N_{beamGap}^{PRB}$ is introduced to calculate the quantity $N'_{RE}$ of REs allocated in one PRB. The process is as follows.

Step 1: the UE firstly calculates the quantity $N'_{RE}$ of REs allocated in one PRB (Physical Resource Block, including 12 frequency-domain units). $N'_{RE} = N_{sc}^{RB} \cdot N_{symb}^{sh} - N_{DMRS}^{PRB} - N_{oh}^{PRB} - N_{beamGap}^{PRB}$ , where: $N_{sc}^{RB} = 12$ , $N_{symb}^{sh}$ is the quantity of time-domain symbols of the PDSCH (indicated by the time-domain parameter of the scheduling signaling); $N_{DMRS}^{PRB}$ is the header overhead of the DMRS (configured or dynamically indicated by the base station); $N_{oh}^{PRB}$ is other overhead and is configured by the base station to the UE, and this parameter is semi-statically configured; $N_{beamGap}^{PRB}$ is overhead introduced due to beam switching.

The calculation of the variable $N_{beamGap}^{PRB}$ is related to beamGaP and the duration of the scheduled data. The instance of the relationship is as shown in Table 2.

As shown in Table 2, when L=2, $N_{beamGap}^{PRB}$ is 0, meaning that no switching in scheduling occurs when L=2, and the main consideration is that the quantity of data symbols is relatively small.

When L=2/3/4/5/6, different values of $N_{beamGap}^{PRB}$ are calculated according to the quantity of symbols. The larger L is, the smaller $N_{beamGap}^{PRB}$ is.

When L is greater than or equal to 7, $N_{beamGap}^{PRB}$ is 0, meaning that $N_{beamGap}^{PRB}$ has negligible influence on the calculation of TB size.

Some examples are given in this implementation. Of course, other data may also be configured, as long as the value representing $N_{beamGap}^{PRB}$ is related to L or beamGap.

For example, it is assumed that in the scheduling information: L=6, that is, $N_{symb}^{sh} = 6$ , and it is assumed that beamGAP=1 symbol. Then $N_{beamGap}^{PRB} = 0.1$ may be obtained by looking up the table. The calculation of the TB size is to substitute $N_{beamGap}^{PRB} = 0.1$ into the above formula, regardless of whether Beam_switch_ ind=0 or 1.

Implementation 2 is as follows.

In this implementation, DCI=0 bit, the scheduled data is PDSCH/CSI-RS or PUSCH, the quantity of symbols of the scheduled data is L=7, and GAP=1OS.

Steps 1, 2 and 4 in this implementation remain the same as those in the Implementation 1. The focus here is to describe how to determine whether the quantity of symbols indicated by the data includes the symbol of the beam switching GAP when Beam_switch_ind is 0 bit or when no Beam_switch_ind indication is included in the scheduling signaling.

When any of the following scheduling conditions is met, the base station and UE consider that the scheduled data includes no GAP.

The schematic diagrams of two scenarios where the scheduled data includes no beam switching GAP are as shown in FIG. 8, where the scheduling condition 1 and scheduling condition 2 are from top to bottom in FIG. 8.

(1) Scheduling condition 1, d <= threshold_GAP: the DCI scheduling indicates that the distance between the start symbol of the downlink data or signal and the last symbol of the PDCCH of the DCI is less than a threshold. As shown in FIG. 8, d <= threshold GAP, threshold_GAP is an integer quantity of symbols, and the quantity of symbols is related to the SCS. In a specific implementation process, the threshold may be defined as the minimum delay from reception of the DCI by the UE to beam switching.

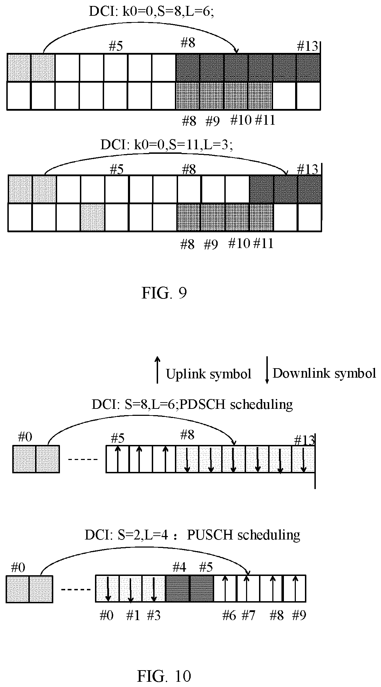

The DCI here is scheduling signaling, and the scheduled object may be PDSCH channel data or a reference signal.
(2) Scheduling condition 2, L <= threshold L: the quantity of scheduled PDSCH or PUSCH data is less than a certain threshold. For example, L <= threshold_L in FIG. 8, and the typical value L is 2 or 3 or 4.
(3) Scheduling condition 3: as shown in FIG. 9, when the start position of the scheduled data is in the SS or PBCH signal, the scheduled data includes no beam switching GAP.

The SS or PBCH is a synchronization signal block, and the base station sends the physical layer broadcast message of the synchronization signal. The base station will not adjust the beam direction during 4 symbols of the SS or PBCH, so it can be considered that no beam switching GAP is included when the start position of the scheduled data is at the symbol position of the SS or PBCH. As shown in FIG. 9, the symbol positions occupied by the SS or PBCH are #8, #9, #10 and #11. When the start symbol of the PDSCH is on any one of #8, #9, #10 and #11, it can be considered that no beam switching GAP is included.
(4) Scheduling condition 4: as shown in FIG. 10, when the start position of the scheduled data is at the first symbol "after the uplink or downlink conversion" (including: from uplink to downlink, or from downlink to uplink, where FIG. 10 shows, from top to bottom, the start symbol of the scheduled PDSCH is at the first downlink symbol, and the start symbol of the scheduled PDSCH is at the first uplink symbol), and as shown in FIG. 10, when the scheduled data is at the first symbol after the uplink or downlink conversion, it is considered that no beam switching GAP is included. When performing the uplink or downlink conversion, the base station or UE may perform the beam switching at the same time. For example, when scheduling the PUSCH data, symbol #6 is the start symbol, and the uplink and downlink conversion time is before symbol 6. Then the UE performs beam switching while performing the uplink and downlink conversion.
(5) When the scheduling information is configured by high-layer signaling, such as: SPS (Semi-Persistent Scheduling) of PDSCH, or CG (Configured Grant) of PUSCH.

When the PDSCH or PUSCH is configured for scheduling, each time the PDSCH or PUSCH data is sent, the time-domain information thereof is agreed through high-layer signaling (or through DCI scheduling once for a plurality of times of data scheduling). In this case, it can be considered that no beam switching GAP is included in the time-domain information of the data.

Supplementary Note: for simplicity of the protocol, the base station and the UE may also agree as follows: when the DCI does not include the Beam_switch_ind indication information (or when the data scheduling signaling is configured by the high layer), no beam switching GAP is included in the scheduling time-domain information by default; and the beam switching GAP is included in the scheduling information by default; or it is determined, through high-layer signaling configuration, whether the beam switching GAP is included in the scheduling time-domain information by default when the DCI does not include the Beam_switch_ind indication information.

Implementation 3 is as follows.

In this implementation, DCI=2 bits, the scheduled data is PUSCH data, the quantity of symbols of the scheduled data is L=7, and GAP=1OS.

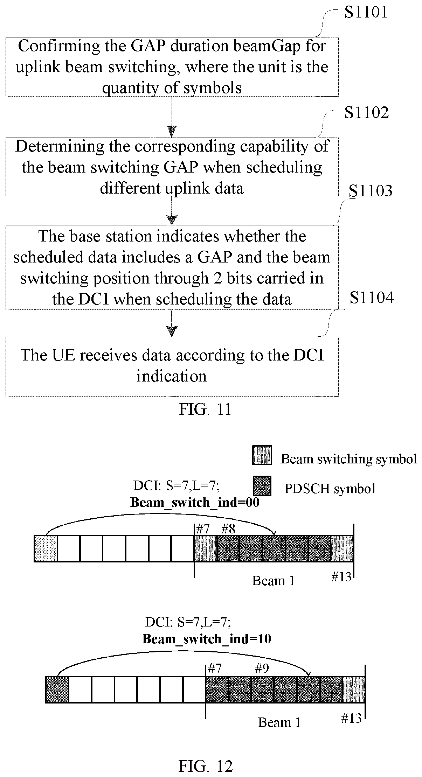

The flow chart of the Implementation 3 of the time-domain parameter indication of data transmission is as shown in FIG. 11.

Step S1101: confirming the GAP duration beamGap for uplink beam switching, where the unit is the quantity of symbols.

As the SCS increases, the quantity of symbols of the uplink channel and the length of the CP become smaller. Therefore, in the duration of a specific beam switching, the quantity of symbols of the beam switching GAP required varies for different SCSs. At the same time, different UEs or base stations have different capabilities, and their beam switching GAPs are also different. In order to facilitate the operations of the base station and UE, a better method is to determine the uplink beam switching capability table by agreement. Corresponding to different SCSs and capabilities, the relevant values may be the same as or different from those in the downlink. The examples of different values are as shown in the following table.

For convenience of description, the UE switching capability device level is simply referred to as capability in this embodiment.

Table 4: GAP parameters (in the unit of symbol) for uplink beam switching with different SCSs/different capabilities

|  | Capability 1 | Capability 2 |
| --- | --- | --- |
| SCS =480KHz | 0 | 0 |
| SCS=960KHz | 1 | 0 |
| SCS =1920KHz | 2 | 1 |

The content of the above table defines the quantities of symbols corresponding to different capability types under different SCSs. Of course, the quantities of symbols described above are only reference examples, and the value thereof may be other integers or decimals, or replaced by time unit; in order to simplify the operations of the UE and the base station, it is also possible to be simplified into one capability type and one value. For example, for all SCSs greater than 480KHz, the switching value is 1 symbol.

Step S 1102: determining the corresponding capability of the beam switching GAP when scheduling different uplink data.

The default method may be used for the process of confirming the duration beamGap of the beam switching GAP, for example, the UE and the base station are both based on capability 1 by default. It is also possible to report the capability to the base station after the UE enters the connected state, and the base station replies with the capability confirmed for use. The capability confirmed by the base station for use is not higher than the capability reported by the UE. If the UE reports capability 2 to the base station, the base station replies with a confirmation that the capability may be 1 or 2.

Although the base station obtains the capability of the UE through reporting, the base station also needs to define a default capability before the capability of the UE is reported. At the same time, different UEs in a cell may also have different capabilities. Therefore, it is necessary to distinguish application scenarios of different switching capabilities.

For the initial access process, a random access signal is sent or other message (such as Msg3, i.e., a message in the third step of the random access process) is sent according to the minimum beam switching GAP capability.

When the UE enters the connected state, the UE reports the capability of the beam switching GAP, and the base station reconfirms the value of the beam switching capability (for example, in the connected state, the capability is 2 based on the UE's data scheduling; when SCS=960KHz, a switching gap of 0 symbol is required).

Step S1103: the base station indicates whether the scheduled data includes a GAP and the beam switching position through 2 bits carried in the DCI when scheduling the data.

In this implementation, the 2-bit information is added to the DCI, to indicate the beam switching information included in the time-domain information of the scheduled data and the corresponding beam switching position when the GAP is included.

Beam_switch_ind: 2 bits, indicating whether the scheduled data includes a beam switching GAP, and the position of the beam switching GAP, for example: 00: indicating that two beam switching GAPs (distributed at the first symbol and the last symbol of the scheduled data in the time domain) are included; 01: indicating that one beam switching GAP is included and is at the first one of symbols of the scheduled data; 10: indicating that one beam switching GAP is included and is at the last one of symbols of the scheduled data; 11: indicating that no beam switching GAP is included.

The schematic diagram of symbols of beam switching is as shown in FIG. 12, where Beam_switch_ind is 00 and Beam_switch_ind is 10 from top to bottom: when using the PDSCH scheduling scheduled by C-RNTI, if Beam_switch_ind is 00, it means that there are two beam switching GAPs in the scheduling with a length of 7 symbols, and the two beam switching GAPs are located at the start symbol 7 and symbol 13 respectively. When using the PDSCH scheduling scheduled by C-RNTI, if Beam_switch_ind is 10, it means that there is one beam switching GAP in the scheduling with a length of 7 symbols, and this beam switching GAP is located at the symbol 13.

Step S1104: the UE receives data according to the DCI indication.

(1) Beam switching is performed according to the beam switching information.
According to the indication of Beam_switch_ind, the UE determines whether the beam switching needs to be completed before the start symbol of the PDSCH. When Beam_switch_ind=11, the beam switching needs to be completed before the start symbol of the PDSCH; and when Beam_switch_ind=01, the beam switching needs to be completed before "the end of the last beam switching GAP symbol".
(2) The TB size is calculated according to the beam switching information and the time-domain scheduling length.

In addition to step 1 of the background art, a variable $N_{beamGap}^{PRB}$ is introduced to calculate the quantity $N'_{RE}$ of REs allocated in one PRB. The process is as follows.

The UE firstly calculates the quantity $N'_{RE}$ of REs allocated in one PRB (Physical Resource Block, including 12 frequency-domain units).

$$N'_{RE} = N_{sc}^{RB} \cdot N_{symb}^{sh} - N_{DMRS}^{PRB} - N_{oh}^{PRB} - N_{beamGap}^{PRB}$$

, where: $N_{sc}^{RB} = 12$ , $N_{symb}^{sh}$ is the quantity of time-domain symbols of the PUSCH (indicated by the time-domain parameter of the scheduling signaling), $N_{DMRS}^{PRB}$ is the header overhead of the DMRS (configured or dynamically indicated by the base station), $N_{oh}^{PRB}$ is other overhead and is configured by the base station to the UE, and this parameter is semi-statically configured, $N_{beamGap}^{PRB}$ is overhead introduced due to beam switching.

The calculation of the variable $N_{beamGap}^{PRB}$ is related to beamGaP and the duration of the scheduled data. The instance of the relationship is as shown in Table 5:

Table 5: beamGaP parameter table

|          | beamGaP=1 symbol | beamGaP=2 symbols | beamGaP=0 symbol |
|----------|------------------|-------------------|------------------|
| L=2      | 0                | 0                 | 0                |
| L=3      | 0.72             | 1.44              | 0                |
| L=4      | 0.15             | 0.3               | 0                |
| L=5, L=6 | 0.1              | 0.2               | 0                |
| L>7      | 0                | 0.1               | 0                |

As shown in Table 5, when L=2, $N_{beamGap}^{PRB}$ is 0, meaning that no switching in scheduling occurs when L=2, and the main consideration is that the quantity of data symbols is relatively small.

When L=2/3/4/5/6, different values of $N_{beamGap}^{PRB}$ are calculated according to the quantity of symbols. The larger L is, the smaller $N_{beamGap}^{PRB}$ is.

When L is greater than or equal to 7, $N_{beamGap}^{PRB}$ is 0, meaning that $N_{beamGap}^{PRB}$ has negligible influence on the calculation of TB size.

Some examples are given in this implementation. Of course, other data may also be configured, as long as the value representing $N_{beamGap}^{PRB}$ is related to L or beamGap.

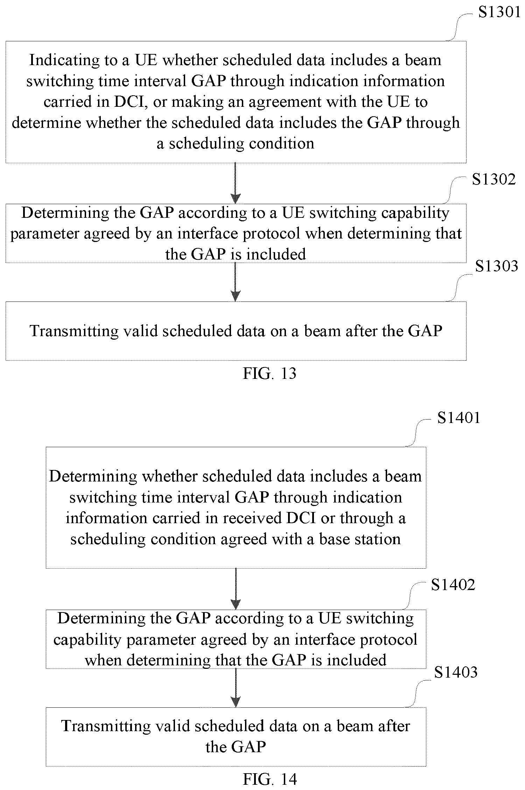

Embodiment 2: this embodiment of the disclosure provides a method for time-domain parameter indication of data transmission, which is applied to a base station. As shown in FIG. 13, the method includes following steps.

Step S1301: indicating to a UE whether scheduled data includes a beam switching time interval GAP through indication information carried in DCI, or making an agreement with the UE to determine whether the scheduled data includes the GAP through a scheduling condition.

Step S1302: determining the GAP according to a UE switching capability parameter agreed by an interface protocol when determining that the GAP is included.

Step S1303: transmitting valid scheduled data on a beam after the GAP.

Optionally, when the agreement is made with the UE to determine whether the scheduled data includes the GAP through the scheduling condition, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the determining the GAP according to the UE switching capability parameter agreed by the interface protocol, includes: determining a quantity of symbols of the GAP according to the UE switching capability parameter agreed by the interface protocol; determining a switching position of the GAP according to switching positions corresponding to different quantities of time units defined by the interface protocol.

Optionally, the indicating to the UE whether the scheduled data includes the beam switching time interval GAP through the indication information carried in the DCI, includes: indicating whether the scheduled data includes the GAP by different values of one bit; or indicating that the scheduled data includes the GAP and a switching position of the GAP by different values of one bit; or indicating whether the scheduled data includes the GAP and a switching position of the GAP by different values of two bits.

Optionally, the scheduled data includes any one of PDSCH data; CSI-RS; PUSCH data.

Optionally, transmitting the scheduled data on the beam after the GAP, includes: introducing resource overhead $N_{beamGap}^{PRB}$ related to beam switching to calculate a length TBsize of a transmission block of the scheduled data when transmitting the scheduled data on the beam after the GAP.

Optionally, the introducing the resource overhead $N_{beamGap}^{PRB}$ related to beam switching, includes: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the introducing the resource overhead $N_{beamGap}^{PRB}$ related to beam switching, includes: determining that $N_{beamGap}^{PRB}$ is 0 when the quantity of symbols of the scheduled data is less than a preset low threshold or greater than a preset high threshold, where the preset high threshold is greater than the preset low threshold.

An embodiment of the disclosure further provides a method for time-domain parameter indication of data transmission, which is applied to a UE. As shown in FIG. 14, the method includes following steps.

Step S 1401: determining whether scheduled data includes a beam switching time interval GAP through indication information carried in received DCI or through a scheduling condition agreed with a base station.

Step S1402: determining the GAP according to a UE switching capability parameter agreed by an interface protocol when determining that the GAP is included.

Step S1403: transmitting valid scheduled data on a beam after the GAP.

Optionally, when it is determined whether the scheduled data includes the GAP through the scheduling condition agreed with the base station, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the determining the GAP according to the UE switching capability parameter agreed by the interface protocol, includes: determining a quantity of symbols of the GAP according to the UE switching capability parameter agreed by the interface protocol; determining a switching position of the GAP according to switching positions corresponding to different quantities of time units defined by the interface protocol.

Optionally, the determining whether the scheduled data includes the GAP through the indication information carried in the received DCI, includes: determining whether the scheduled data includes the GAP through different values of one bit carried in the DCI; or determining whether the scheduled data includes the GAP and a switching position of the GAP through different values of one bit carried in the DCI; or determining whether the scheduled data includes the GAP and a switching position of the GAP through different values of two bits carried in the DCI.

Optionally, the scheduled data includes any one of: PDSCH data; CSI-RS; PUSCH data.

Optionally, transmitting the scheduled data after beam switching in the GAP, includes: introducing resource overhead $N_{beamGap}^{PRB}$ related to beam switching to calculate a length TBsize of a transmission block of the scheduled data when transmitting the scheduled data on the beam after the GAP.

Optionally, the introducing the resource overhead $N_{beamGap}^{PRB}$ related to beam switching, includes: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the introducing the resource overhead $N_{beamGap}^{PRB}$ related to beam switching, includes: determining that $N_{beamGap}^{PRB}$ is 0 when the quantity of symbols of the scheduled data is less than a preset low threshold or greater than a preset high threshold, where the preset high threshold is greater than the preset low threshold.

A base station for time-domain parameter indication of data transmission provided by an embodiment of the disclosure belongs to the same inventive concept as the base station in the above Embodiment 1 of the disclosure. Various implementations of the time-domain parameter indication of data transmission applied to the base station in the system provided by the above embodiment may be applied to the base station for time-domain parameter indication of data transmission in this embodiment, and will not be repeated here.

A UE for time-domain parameter indication of data transmission provided by an embodiment of the disclosure belongs to the same inventive concept as the UE in the above Embodiment 1 of the disclosure. Various implementations of the time-domain parameter indication of data transmission applied to the UE in the system provided by the above embodiment may be applied to the UE for time-domain parameter indication of data transmission in this embodiment, and will not be repeated here.

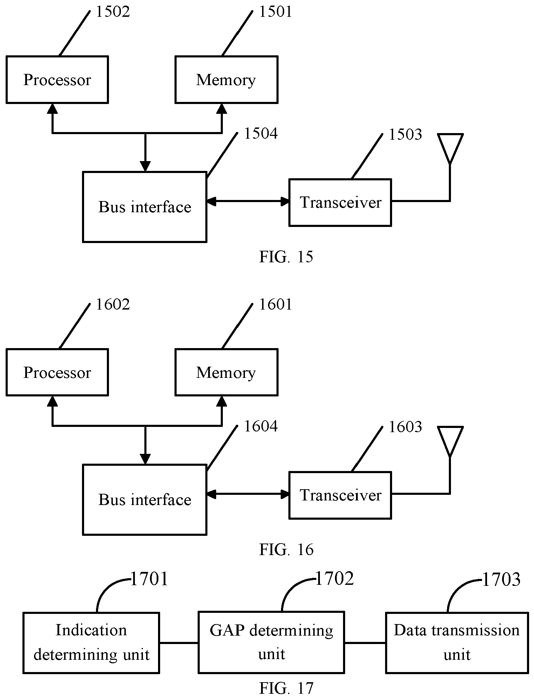

Embodiment 3: this embodiment of the disclosure provides a base station for time-domain parameter indication of data transmission, as shown in FIG. 15, including: a memory 1501, a processor 1502, a transceiver 1503 and a bus interface 1504.

The processor 1502 is responsible for managing the bus architecture and general processing, and the memory 1501 may store the data used by the processor 1502 when performing the operations. The transceiver 1503 is configured to receive and send the data under the control of the processor 1502.

The bus architecture may include any quantities of interconnected buses and bridges, and link various circuits of one or more processors represented by the processor 1502 and the memory represented by the memory 1501. The bus architecture may further link various other circuits such as peripheral device, voltage regulator and power management circuit, which are all well known in the art and thus will not be further described again herein. The bus interface provides an interface. The processor 1502 is responsible for managing the bus architecture and general processing, and the memory 1501 may store the data used by the processor 1502 when performing the operations.

The procedure disclosed by embodiments of the disclosure may be applied in the processor 1502 or implemented by the processor 1502. In the implementation process, each step of the signal processing flow may be completed by the integrated logic circuit of hardware in the processor 1502 or the instruction in the form of software. The processor 1502 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in embodiments of the disclosure. The general-purpose processor may be a microprocessor or any conventional processor or the like. The steps of the method disclosed in combination with embodiments of the disclosure may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1501, and the processor 1502 reads the information in the memory 1501 and completes the steps of the signal processing flow in combination with its hardware.

The processor 1502 is configured to read a program in the memory 1501 to: indicate to a UE whether scheduled data includes a beam switching time interval GAP through indication information carried in DCI, or make an agreement with the UE to determine whether the scheduled data includes the GAP through a scheduling condition; determine the GAP according to a UE switching capability parameter agreed by an interface protocol when determining that the GAP is included; transmit the valid scheduled data on a beam after the GAP.

Optionally, when the processor makes the agreement with the UE to determine whether the scheduled data includes the GAP through the scheduling condition, then the processor determines that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the processor determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the processor indicates to the UE whether the scheduled data includes the beam switching time interval GAP through the indication information carried in the DCI by: indicating whether the scheduled data includes the GAP by different values of one bit; or indicating that the scheduled data includes the GAP and a switching position of the GAP by different values of one bit; or indicating whether the scheduled data includes the GAP and a switching position of the GAP by different values of two bits.

Optionally, the scheduled data includes any one of: PDSCH data; CSI-RS; PUSCH data.

Optionally, the processor transmits the scheduled data on the beam after the GAP by: introducing resource overhead $N_{beamGap}^{PRB}$ related to beam switching to calculate a length TBsize of a transmission block of the scheduled data when transmitting the scheduled data on the beam after the GAP.

Optionally, the processor introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the processor introduces the resource overhead $N_{beamGap}^{PRB}$ related to beam switching by: determining that $N_{beamGap}^{PRB}$ is 0 when the quantity of symbols of the scheduled data is less than a preset low threshold or greater than a preset high threshold, where the preset high threshold is greater than the preset low threshold.

An embodiment of the disclosure provides a UE for time-domain parameter indication of data transmission, as shown in FIG. 16, including: a memory 1601, a processor 1602, a transceiver 1603 and a bus interface 1604.

The processor 1602 is responsible for managing the bus architecture and general processing, and the memory 1601 may store the data used by the processor 1602 when performing the operations. The transceiver 1603 is configured to receive and send the data under the control of the processor 1602.

The bus architecture may include any quantities of interconnected buses and bridges, and specifically link various circuits of one or more processors represented by the processor 1602 and the memory represented by the memory 1601. The bus architecture may further link various other circuits such as peripheral device, voltage regulator and power management circuit, which are all well known in the art and thus will not be further described again herein. The bus interface provides an interface. The processor 1602 is responsible for managing the bus architecture and general processing, and the memory 1601 may store the data used by the processor 1602 when performing the operations.

The procedure disclosed by embodiments of the disclosure may be applied in the processor 1602 or implemented by the processor 1602. In the implementation process, each step of the signal processing flow may be completed by the integrated logic circuit of hardware in the processor 1602 or the instruction in the form of software. The processor 1602 may be a general-purpose processor, a digital signal processor, an application specific integrated circuit, a field programmable gate array or other programmable logic device, a discrete gate or transistor logic device, or a discrete hardware component, and may implement or perform each method, step and logical block diagram disclosed in embodiments of the disclosure. The general-purpose processor may be a microprocessor or any conventional processor or the like. The steps of the method disclosed in combination with embodiments of the disclosure may be directly completed by a hardware processor, or completed by a combination of hardware and software modules in the processor. The software modules may be located in the random access memory, flash memory, read only memory, programmable read only memory or electrically erasable programmable read only memory, register and other mature storage medium in the art. The storage medium is located in the memory 1601, and the processor 1602 reads the information in the memory 1601 and completes the steps of the signal processing flow in combination with its hardware.

The processor 1602 is configured to read a program in the memory 1601 to: determine whether scheduled data includes a beam switching time interval GAP through indication information carried in received DCI or through a scheduling condition; determine the GAP according to a UE switching capability parameter agreed by an interface protocol when determining that the GAP is included; transmit the valid scheduled data on a beam after the GAP.

Optionally, the processor determines whether the scheduled data includes the GAP through the scheduling condition agreed with a base station, and then the processor determines that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the processor determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the processor determines whether the scheduled data includes the GAP through the indication information carried in the received DCI by: determining whether the scheduled data includes the GAP through different values of one bit carried in the DCI; or determining whether the scheduled data includes the GAP and a switching position of the GAP through different values of one bit carried in the DCI; or determining whether the scheduled data includes the GAP and a switching position of the GAP through different values of two bits carried in the DCI.

Optionally, the scheduled data includes any one of: PDSCH data; CSI-RS; PUSCH data.

Optionally, the processor transmits the scheduled data after beam switching in the GAP by: introducing resource overhead $N_{beamGap}^{PRB}$ related to beam switching to calculate a length TBsize of a transmission block of the scheduled data when transmitting the scheduled data on the beam after the GAP.

Optionally, the processor introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the processor introduces the resource overhead $N_{beamGap}^{PRB}$ related to beam switching by: determining that $N_{beamGap}^{PRB}$ is 0 when the quantity of symbols of the scheduled data is less than a preset low threshold or greater than a preset high threshold, where the preset high threshold is greater than the preset low threshold.

The base station for time-domain parameter indication of data transmission provided by embodiments of the disclosure belongs to the same inventive concept as the base station in the above Embodiment 1 of the disclosure. Various implementations of the time-domain parameter indication of data transmission applied to the base station in the system provided by the above embodiment may be applied to the base station for time-domain parameter indication of data transmission in this embodiment, and will not be repeated here.

The UE for time-domain parameter indication of data transmission provided by embodiments of the disclosure belongs to the same inventive concept as the UE in the above Embodiment 1 of the disclosure. Various implementations of the time-domain parameter indication of data transmission applied to the UE in the system provided by the above embodiment may be applied to the UE for time-domain parameter indication of data transmission in this embodiment, and will not be repeated here.

An embodiment of the disclosure provides a base station for time-domain parameter indication of data transmission, as shown in FIG. 17, including: an indication determining unit 1701 configured to indicate to a UE whether scheduled data includes a beam switching time interval GAP through indication information carried in DCI, or make an agreement with the UE to determine whether the scheduled data includes the GAP through a scheduling condition; a GAP determining unit 1702 configured to determine the GAP according to a UE switching capability parameter agreed by an interface protocol when determining that the GAP is included; a data transmission unit 1703 configured to transmit valid scheduled data on a beam after the GAP.

Optionally, when the indication determining unit makes the agreement with the UE to determine whether the scheduled data includes the GAP through the scheduling condition, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the indication determining unit determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the indication determining unit indicates to the UE whether the scheduled data includes the beam switching time interval GAP through the indication information carried in the DCI by: indicating whether the scheduled data includes the GAP by different values of one bit; or indicating that the scheduled data includes the GAP and a switching position of the GAP by different values of one bit; or indicating whether the scheduled data includes the GAP and a switching position of the GAP by different values of two bits.

Optionally, the scheduled data includes any one of: PDSCH data; CSI-RS; PUSCH data.

Optionally, the data transmission unit transmits the scheduled data on the beam after the GAP by: introducing resource overhead $N_{beamGap}^{PRB}$ related to beam switching to calculate a length TBsize of a transmission block of the scheduled data when transmitting the scheduled data on the beam after the GAP.

Optionally, the data transmission unit introduces the resource overhead $N_{beamGap}^{PRB}$ related to beam switching by: determining $N_{beamGap}^{PRB}$ according to a quantity of symbols of the GAP and a quantity of symbols of the scheduled data, where the larger the quantity of symbols of the scheduled data, the smaller $N_{beamGap}^{PRB}$.

Optionally, the data transmission unit introduces the resource overhead $N_{beamGap}^{PRB}$ related to beam switching by: determining that $N_{beamGap}^{PRB}$ is 0 when the quantity of symbols of the scheduled data is less than a preset low threshold or greater than a preset high threshold, where the preset high threshold is greater than the preset low threshold.

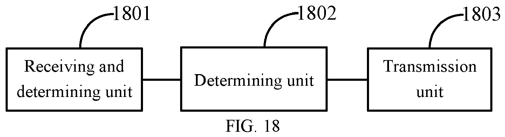

An embodiment of the disclosure provides a UE for time-domain parameter indication of data transmission, as shown in FIG. 18, including: a receiving and determining unit 1801 configured to determine whether scheduled data includes a beam switching time interval GAP through indication information carried in received DCI or through a scheduling condition; a determining unit 1802 configured to determine the GAP according to a UE switching capability parameter agreed by an interface protocol when determining that the GAP is included; a transmission unit 1803 configured to transmit valid scheduled data on a beam after the GAP.

Optionally, when the receiving and determining unit determines whether the scheduled data includes the GAP through the scheduling condition agreed with the base station, then it is determined that the scheduled data does not include the GAP when any of following scheduling conditions is met: a delay between a start symbol of the scheduled data indicated by DCI scheduling and a last symbol of a PDCCH of the DCI is less than a preset threshold; a length of scheduled PDSCH or PUSCH data is less than a preset length; a start position of the scheduled data is at an SS or a PBCH signal; the start position of the scheduled data is at a first symbol after conversion of an uplink signal or a downlink signal; the scheduled data is data configured by high-layer signaling; the scheduled data is data scheduled by a specific DCI format.

Optionally, the UE switching capability parameter includes a UE switching capability device level related to the UE itself, and includes at least one of subcarrier spacing, a DCI format of the scheduled data, and a transmission direction of the scheduled data.

Optionally, the receiving and determining unit determines the GAP according to the UE switching capability parameter agreed by the interface protocol by: determining a quantity of symbols of the GAP according to the UE switching capability parameter agreed by the interface protocol; determining a switching position of the GAP according to switching positions corresponding to different quantities of time units defined by the interface protocol.

Optionally, the receiving and determining unit determines whether the scheduled data includes the GAP through the indication information carried in the received DCI by: determining whether the scheduled data includes the GAP through different values of one bit carried in the DCI; or determining whether the scheduled data includes the GAP and a switching position of the GAP through different values of one bit carried in the DCI; or determining whether the scheduled data includes the GAP and a switching position of the GAP through different values of two bits carried in the DCI.

Optionally, the scheduled data includes any one of: PDSCH data; CSI-RS; PUSCH data.

Optionally, the transmission unit transmits the scheduled data after beam switching in the GAP by: introducing resource overhead $N_{beamGap}^{PRB}$ related to beam switching to calculate a length TBsize of a transmission block of the scheduled data when transmitting the scheduled data on the beam after the GAP.

Optionally, the transmission unit introduces the resource overhead $N_{beamGap}^{PRB}$ related to beam switching by: determining $N_{beamGap}^{PRB}$ according to a quantity of symbols of the GAP and the quantity of symbols of the scheduled data, where the larger the quantity of symbols of the scheduled data, the smaller $N_{beamGap}^{PRB}$.

Optionally, the transmission unit introduces the resource overhead $N_{beamGap}^{PRB}$ related to beam switching and is further configured to: determine that $N_{beamGap}^{PRB}$ is 0 when the quantity of symbols of the scheduled data is less than a preset low threshold or greater than a preset high threshold, where the preset high threshold is greater than the preset low threshold.

The base station for time-domain parameter indication of data transmission provided by embodiments of the disclosure belongs to the same inventive concept as the base station in the above Embodiment 1 of the disclosure. Various implementations of the time-domain parameter indication of data transmission applied to the base station in the system provided by the above embodiment may be applied to the base station for time-domain parameter indication of data transmission in this embodiment, and will not be repeated here.

The UE for time-domain parameter indication of data transmission provided by embodiments of the disclosure belongs to the same inventive concept as the UE in the above Embodiment 1 of the disclosure. Various implementations of the time-domain parameter indication of data transmission applied to the UE in the system provided by the above embodiment may be applied to the UE for time-domain parameter indication of data transmission in this embodiment, and will not be repeated here.

An embodiment of the disclosure further provides a computer program medium storing a computer program thereon, where the program, when executed by a processor, implements the steps of the method for time-domain parameter indication of data transmission applied to the base station provided in the above Embodiment 2.

The disclosure further provides a computer program medium storing a computer program thereon, where the program, when executed by a processor, implements the steps of the method for time-domain parameter indication of data transmission applied to the UE provided in the above Embodiment 2.

In embodiments provided by the disclosure, it should be understood that the disclosed system, devices and methods may be implemented in other manners. For example, the device embodiments described above are only schematic, for example, the division of the modules is merely a logical function division. In an actual implementation, there may be other division manners, for example, a plurality of modules or components may be combined or integrated to another system, or some features may be ignored or not performed. In addition, the displayed or discussed mutual coupling or direct coupling or communication connection may be implemented through the indirect coupling or communication connection between some interfaces, devices or modules, and may be in the electrical or other forms.

The modules described as separate components may or may not be physically separated, and the components displayed as modules may or may not be physical modules, that is, may be located in one place or may be distributed onto multiple network modules. Some or all of the modules may be selected according to the actual needs to achieve the objects of the solutions of embodiments.

In addition, the functional modules in each embodiment of the disclosure may be integrated into one processing module, or each module may exist alone physically, or two or more modules may be integrated into one module. The above-mentioned integrated modules can be implemented in the form of hardware, or can be implemented in the form of software functional modules. When the integrated module is implemented in the form of software functional module and sold or used as an independent product, it may be stored in a computer readable storage medium.

The above embodiments may be implemented in whole or in part by software, hardware, firmware or any combination thereof. When implemented by software, they may be implemented in the form of a computer program product in whole or in part.

The computer program product includes one or more computer instructions. When the computer program instructions are loaded and executed on a computer, the processes or functions described in embodiments of the disclosure are generated in whole or in part. The computer may be a general-purpose computer, a special-purpose computer, a computer network, or other programmable devices. The computer instructions may be stored in a computer readable storage medium or transmitted from a computer readable storage medium to another computer readable storage medium. For example, the computer instructions may be transmitted from a website, computer, server or data center to another website, computer, server or data center in a wired (e.g., coaxial cable, optical fiber, Digital Subscriber Line (DSL)) or wireless (e.g., infrared, wireless, microwave, etc.) way. The computer readable storage medium may be any available medium that can be stored by a computer, or a data storage device such as server or data center that is integrated with one or more available media. The available medium may be a magnetic medium (for example, floppy disk, hard disk, magnetic tape), an optical medium (for example, DVD), or a semiconductor medium (for example, Solid State Disk (SSD)), etc.

The technical solutions provided by embodiments of the disclosure are introduced in detail above, specific examples are used in the disclosure to illustrate the principles and embodiments of the disclosure, and the description of the above embodiments is only used to help the understanding of the methods of the disclosure and the core ideas thereof; and at the same time, those ordinary skilled in the art may make modifications on the specific embodiments and the application scope according to the ideas of the disclosure. In summary, the content of this specification should not be construed as a limitation on the disclosure.

It should be understood by those skilled in the art that embodiments of the disclosure can be provided as methods, systems and computer program products. Thus the disclosure can take the form of hardware embodiments alone, software embodiments alone, or embodiments combining the software and hardware aspects. Also the disclosure can take the form of computer program products implemented on one or more computer usable storage mediums (including but not limited to magnetic disk memories, CD-ROMs, optical memories and the like) including computer usable program codes therein.

The disclosure is described by reference to the flow charts and/or the block diagrams of the methods, the devices (systems) and the computer program products according to the disclosure. It should be understood that each process and/or block in the flow charts and/or the block diagrams, and a combination of processes and/or blocks in the flow charts and/or the block diagrams can be implemented by the computer program instructions. These computer program instructions can be provided to a general-purpose computer, a dedicated computer, an embedded processor, or a processor of another programmable data processing device to produce a machine, so that an apparatus for implementing the functions specified in one or more processes of the flow charts and/or one or more blocks of the block diagrams is produced by the instructions executed by the computer or the processor of another programmable data processing device.

These computer program instructions can also be stored in a computer readable memory which is capable of guiding the computer or another programmable data processing device to operate in a particular way, so that the instructions stored in the computer readable memory produce a manufacture including the instruction apparatus which implements the functions specified in one or more processes of the flow charts and/or one or more blocks of the block diagrams.

These computer program instructions can also be loaded onto the computer or another programmable data processing device, so that a series of operation steps are performed on the computer or another programmable device to produce the computer-implemented processing. Thus the instructions executed on the computer or another programmable device provide steps for implementing the functions specified in one or more processes of the flow charts and/or one or more blocks of the block diagrams.

Evidently those skilled in the art can make various modifications and variations to the disclosure without departing from the spirit and scope of the disclosure. Thus the disclosure is also intended to encompass these modifications and variations to the disclosure as long as these modifications and variations come into the scope of the claims of the disclosure and their equivalents.

**Claims**

1. A method for time-domain parameter indication of data transmission, applied to a base station, the method comprising:

   indicating to a User Equipment, UE, whether scheduled data comprises a beam switching time interval GAP through indication information carried in Downlink Control Information, DCI, or making an agreement with the UE to determine whether the scheduled data comprises the GAP through a scheduling condition;
determining the GAP according to a UE switching capability parameter agreed by an interface protocol when determining that the GAP is comprised;
transmitting the scheduled data on a beam after the GAP.

2. The method according to claim 1, wherein when the agreement is made with the UE to determine whether the scheduled data comprises the GAP through the scheduling condition, then it is determined that the scheduled data does not include the GAP when any of following scheduling conditions is met:

a delay between a start symbol of the scheduled data indicated by DCI scheduling and a last symbol of a Physical Downlink Control Channel, PDCCH, of the DCI is less than a preset threshold;
a length of scheduled Physical Downlink Shared Channel, PDSCH, or Physical Uplink Shared Channel, PUSCH, data is less than a preset length;
a start position of the scheduled data is at a Synchronization Signal, SS, or a Physical Broadcast Channel, PBCH, signal;
the start position of the scheduled data is at a first symbol after conversion of an uplink signal or a downlink signal;
the scheduled data is data configured by high-layer signaling;
the scheduled data is data scheduled by a specific DCI format.

3. The method according to claim 1 or 2, wherein the UE switching capability parameter comprises a UE switching capability device level related to the UE itself, and comprises at least one of subcarrier spacing, a DCI format of the scheduled data, and a transmission direction of the scheduled data.

4. The method according to claim 1, wherein the determining the GAP according to the UE switching capability parameter agreed by the interface protocol, comprises:

determining a quantity of symbols of the GAP according to the UE switching capability parameter agreed by the interface protocol;
determining a switching position of the GAP according to switching positions corresponding to different quantities of time units defined by the interface protocol.

5. The method according to claim 1 or 2, wherein the indicating to the UE whether the scheduled data comprises the beam switching time interval GAP through the indication information carried in the DCI, comprises:

indicating whether the scheduled data comprises the GAP by different values of one bit; or
indicating that the scheduled data comprises the GAP and a switching position of the GAP by different values of one bit; or
indicating whether the scheduled data comprises the GAP and a switching position of the GAP by different values of two bits.

6. The method according to claim 1, wherein the scheduled data comprises any one of

Physical Downlink Shared Channel, PDSCH, data;
Channel State Information Reference Signal, CSI-RS;
Physical Uplink Shared Channel, PUSCH, data.

7. The method according to claim 1, wherein transmitting the scheduled data on the beam after the GAP, comprises:

introducing resource overhead $N_{beamGap}^{PRB}$ related to beam switching to calculate a length TBsize of a transmission block of the scheduled data when transmitting the scheduled data on the beam after the GAP.

8. The method according to claim 7, wherein the introducing the resource overhead $N_{beamGap}^{PRB}$ related to beam switching, comprises:

determining $N_{beamGap}^{PRB}$ according to a quantity of symbols of the GAP and a quantity of symbols of the scheduled data, wherein the larger the quantity of symbols of the scheduled data, the smaller $N_{beamGap}^{PRB}$.

**9.** The method according to claim 7 or 8, wherein the introducing the resource overhead $N_{beamGap}^{PRB}$ related to beam switching, comprises:

determining that $N_{beamGap}^{PRB}$ is 0 when the quantity of symbols of the scheduled data is less than a preset low threshold or greater than a preset high threshold, wherein the preset high threshold is greater than the preset low threshold.

**10.** A method for time-domain parameter indication of data transmission, applied to a User Equipment, UE, the method comprising:

determining whether scheduled data comprises a beam switching time interval GAP through indication information carried in received Downlink Control Information, DCI, or through a scheduling condition agreed with a base station;
determining the GAP according to a UE switching capability parameter agreed by an interface protocol when determining that the GAP is comprised;
transmitting the scheduled data on a beam after the GAP.

**11.** The method according to claim 10, wherein when it is determined whether the scheduled data comprises the GAP through the scheduling condition agreed with the base station, then it is determined that the scheduled data does not include the GAP when any of following scheduling conditions is met:

a delay between a start symbol of the scheduled data indicated by DCI scheduling and a last symbol of a Physical Downlink Control Channel, PDCCH, of the DCI is less than a preset threshold;
a length of scheduled Physical Downlink Shared Channel, PDSCH, or Physical Uplink Shared Channel, PUSCH, data is less than a preset length;
a start position of the scheduled data is at a Synchronization Signal, SS, or a PBCH signal;
the start position of the scheduled data is at a first symbol after conversion of an uplink signal or a downlink signal;
the scheduled data is data configured by high-layer signaling;
the scheduled data is data scheduled by a specific DCI format.

**12.** The method according to claim 10 or 11, wherein the UE switching capability parameter comprises a UE switching capability device level related to the UE itself, and comprises at least one of subcarrier spacing, a DCI format of the scheduled data, and a transmission direction of the scheduled data.

**13.** The method according to claim 10, wherein the determining the GAP according to the UE switching capability parameter agreed by the interface protocol, comprises:

determining a quantity of symbols of the GAP according to the UE switching capability parameter agreed by the interface protocol;
determining a switching position of the GAP according to switching positions corresponding to different quantities of time units defined by the interface protocol.

**14.** The method according to claim 10 or 11, wherein the determining whether the scheduled data comprises the GAP through the indication information carried in the received DCI, comprises:

determining whether the scheduled data comprises the GAP through different values of one bit carried in the DCI; or
determining whether the scheduled data comprises the GAP and a switching position of the GAP through different values of one bit carried in the DCI; or
determining whether the scheduled data comprises the GAP and a switching position of the GAP through different values of two bits carried in the DCI.

**15.** The method according to claim 10, wherein the scheduled data comprises any one of:

Physical Downlink Shared Channel, PDSCH, data;
Channel State Information Reference Signal, CSI-RS;

Physical Uplink Shared Channel, PUSCH, data.

16. The method according to claim 10, wherein transmitting the scheduled data after beam switching in the GAP, comprises:

   introducing resource overhead $N_{beamGap}^{PRB}$ related to beam switching to calculate a length TBsize of a transmission block of the scheduled data when transmitting the scheduled data on the beam after the GAP.

17. The method according to claim 16, wherein the introducing the resource overhead $N_{beamGap}^{PRB}$ related to beam switching, comprises: determining $N_{beamGap}^{PRB}$ according to a quantity of symbols of the GAP and a quantity of symbols of the scheduled data, wherein the larger the quantity of symbols of the scheduled data, the smaller $N_{beamGap}^{PRB}$.

18. The method according to claim 16 or 17, wherein the introducing the resource overhead $N_{beamGap}^{PRB}$ related to beam switching, comprises: determining that $N_{beamGap}^{PRB}$ is 0 when the quantity of symbols of the scheduled data is less than a preset low threshold or greater than a preset high threshold, wherein the preset high threshold is greater than the preset low threshold.

19. A base station for time-domain parameter indication of data transmission, comprising a memory and a processor, wherein:

   the memory is configured to store a computer program;
   the processor is configured to read the program in the memory and perform following steps:

   indicating to a User Equipment, UE, whether scheduled data comprises a beam switching time interval GAP through indication information carried in Downlink Control Information, DCI, or making an agreement with the UE to determine whether the scheduled data comprises the GAP through a scheduling condition; determining the GAP according to a UE switching capability parameter agreed by an interface protocol when determining that the GAP is comprised;
   transmitting the scheduled data on a beam after the GAP.

20. The base station according to claim 19, wherein when the processor makes the agreement with the UE to determine whether the scheduled data comprises the GAP through the scheduling condition, then the processor determines that the scheduled data does not include the GAP when any of following scheduling conditions is met:

   a delay between a start symbol of the scheduled data indicated by DCI scheduling and a last symbol of a Physical Downlink Control Channel, PDCCH, of the DCI is less than a preset threshold;
   a length of scheduled Physical Downlink Shared Channel, PDSCH, or Physical Uplink Shared Channel, PUSCH, data is less than a preset length;
   a start position of the scheduled data is at a Synchronization Signal, SS, or a Physical Broadcast Channel, PBCH, signal;
   the start position of the scheduled data is at a first symbol after conversion of an uplink signal or a downlink signal;
   the scheduled data is data configured by high-layer signaling;
   the scheduled data is data scheduled by a specific DCI format.

21. The base station according to claim 19 or 20, wherein the UE switching capability parameter comprises a UE switching capability device level related to the UE itself, and comprises at least one of subcarrier spacing, a DCI format of the scheduled data, and a transmission direction of the scheduled data.

22. The base station according to claim 19, wherein the processor determines the GAP according to the UE switching capability parameter agreed by the interface protocol by:

   determining a quantity of symbols of the GAP according to the UE switching capability parameter agreed by the interface protocol;

determining a switching position of the GAP according to switching positions corresponding to different quantities of time units defined by the interface protocol.

23. The base station according to claim 19 or 20, wherein the processor indicates to the UE whether the scheduled data comprises the beam switching time interval GAP through the indication information carried in the DCI by:

indicating whether the scheduled data comprises the GAP by different values of one bit; or
indicating that the scheduled data comprises the GAP and a switching position of the GAP by different values of one bit; or
indicating whether the scheduled data comprises the GAP and a switching position of the GAP by different values of two bits.

24. The base station according to claim 19, wherein the scheduled data comprises any one of:

Physical Downlink Shared Channel, PDSCH, data;
Channel State Information Reference Signal, CSI-RS;
Physical Uplink Shared Channel, PUSCH, data.

25. The base station according to claim 19, wherein the processor transmits the scheduled data on the beam after the GAP by:

introducing resource overhead $N_{beamGap}^{PRB}$ related to beam switching to calculate a length TBsize of a transmission block of the scheduled data when transmitting the scheduled data on the beam after the GAP.

26. The base station according to claim 25, wherein the processor introduces the resource overhead $N_{beamGap}^{PRB}$ related to beam switching by:

determining $N_{beamGap}^{PRB}$ according to a quantity of symbols of the GAP and a quantity of symbols of the scheduled data, wherein the larger the quantity of symbols of the scheduled data, the smaller $N_{beamGap}^{PRB}$.

27. The base station according to claim 25 or 26, wherein the processor introduces the resource overhead $N_{beamGap}^{PRB}$ related to beam switching by:

determining that $N_{beamGap}^{PRB}$ is 0 when the quantity of symbols of the scheduled data is less than a preset low threshold or greater than a preset high threshold, wherein the preset high threshold is greater than the preset low threshold.

28. A User Equipment, UE, for time-domain parameter indication of data transmission, comprising a memory and a processor, wherein:

the memory is configured to store a computer program;
the processor is configured to read the program in the memory and perform following steps:

determining whether scheduled data comprises a beam switching time interval GAP through indication information carried in received Downlink Control Information, DCI, or through a scheduling condition;
determining the GAP according to a UE switching capability parameter agreed by an interface protocol when determining that the GAP is comprised;
transmitting the scheduled data on a beam after the GAP.

29. The UE according to claim 28, wherein when the processor determines whether the scheduled data comprises the GAP through the scheduling condition agreed with a base station, then the processor determines that the scheduled data does not include the GAP when any of following scheduling conditions is met:

a delay between a start symbol of the scheduled data indicated by DCI scheduling and a last symbol of a Physical Downlink Control Channel, PDCCH, of the DCI is less than a preset threshold;
a length of scheduled Physical Downlink Shared Channel, PDSCH, or Physical Uplink Shared Channel, PUSCH,

data is less than a preset length;

a start position of the scheduled data is at a Synchronization Signal, SS, or a PBCH signal;

the start position of the scheduled data is at a first symbol after conversion of an uplink signal or a downlink signal;

the scheduled data is data configured by high-layer signaling;

the scheduled data is data scheduled by a specific DCI format.

**30.** The UE according to claim 28 or 29, wherein the UE switching capability parameter comprises a UE switching capability device level related to the UE itself, and comprises at least one of subcarrier spacing, a DCI format of the scheduled data, and a transmission direction of the scheduled data.

**31.** The UE according to claim 29, wherein the processor determines the GAP according to the UE switching capability parameter agreed by the interface protocol by:

determining a quantity of symbols of the GAP according to the UE switching capability parameter agreed by the interface protocol;

determining a switching position of the GAP according to switching positions corresponding to different quantities of time units defined by the interface protocol.

**32.** The UE according to claim 28 or 29, wherein the processor determines whether the scheduled data comprises the GAP through the indication information carried in the received DCI by:

determining whether the scheduled data comprises the GAP through different values of one bit carried in the DCI; or

determining whether the scheduled data comprises the GAP and a switching position of the GAP through different values of one bit carried in the DCI; or

determining whether the scheduled data comprises the GAP and a switching position of the GAP through different values of two bits carried in the DCI.

**33.** The UE according to claim 28, wherein the scheduled data comprises any one of:

Physical Downlink Shared Channel, PDSCH, data;

Channel State Information Reference Signal, CSI-RS;

Physical Uplink Shared Channel, PUSCH, data.

**34.** The UE according to claim 28, wherein the processor transmits the scheduled data after beam switching in the GAP by:

introducing resource overhead $N_{beamGap}^{PRB}$ related to beam switching to calculate a length TBsize of a transmission block of the scheduled data when transmitting the scheduled data on the beam after the GAP.

**35.** The UE according to claim 34, wherein the processor introduces the resource overhead $N_{beamGap}^{PRB}$ related to beam switching by:

determining $N_{beamGap}^{PRB}$ according to a quantity of symbols of the GAP and a quantity of symbols of the scheduled data, wherein the larger the quantity of symbols of the scheduled data, the smaller $N_{beamGap}^{PRB}$.

**36.** The UE according to claim 34 or 35, wherein the processor introduces the resource overhead $N_{beamGap}^{PRB}$ related to beam switching by:

determining that $N_{beamGap}^{PRB}$ is 0 when the quantity of symbols of the scheduled data is less than a preset low threshold or greater than a preset high threshold, wherein the preset high threshold is greater than the preset low threshold.

**37.** A base station for time-domain parameter indication of data transmission, comprising:

an indication determining unit configured to indicate to a User Equipment, UE, whether scheduled data comprises a beam switching time interval GAP through indication information carried in Downlink Control Information, DCI,

or making an agreement with the UE to determine whether the scheduled data comprises the GAP through a scheduling condition;

a GAP determining unit configured to determine the GAP according to a UE switching capability parameter agreed by an interface protocol when determining that the GAP is comprised;

a data transmission unit configured to transmit the scheduled data on a beam after the GAP.

38. A User Equipment, UE, for time-domain parameter indication of data transmission, comprising:

a receiving and determining unit configured to determine whether scheduled data comprises a beam switching time interval GAP through indication information carried in received Downlink Control Information, DCI, or through a scheduling condition;

a determining unit configured to determine the GAP according to a UE switching capability parameter agreed by an interface protocol when determining that the GAP is comprised;

a transmission unit configured to transmit the scheduled data on a beam after the GAP.

39. A computer program medium storing a computer program thereon, wherein the program, when executed by a processor, implements steps of the method of any one of claims 1 to 9; or the program, when executed by a processor, implements steps of the method of any one of claims 10 to 18.

PDSCH scheduling (k0=0, S=7, L=7)

#0 #8 #13

PDCCH

Slot n Slot n+1

PDSCH scheduling (k0=1, S=0, L=7)   PDSCH scheduling (k0=1, S=7, L=7)

#0 #7 #13

PDCCH

Slot n Slot n+1

FIG. 1

S=7,L=7

#6 #7

#0 #13

Beam 1

Beam 1 L=5, S=7

S=8,L=6

#6 #7 #8

#0 #13

Beam 2 Beam 1

FIG. 2

S301

UE calculates a quantity of REs allocated in
one PRB

S302

UE calculates a total quantity of REs
allocated to the PDSCH

S303

Calculate the TB size according to the code
rate, the modulation order, and the quantity of
layers

FIG. 3

#0          #6 #7          #13          { S=0, L=7;
                                          S =7,L=7}

#0          #6 #7          #13          {S=0, L=7; S=1,L=7
Beam 1 Beam 1                            S =7,L=7, S=8, L=6}

#0          #6 #7          #13          {S=0, L=7; S=1, L=5
Beam 1     Beam 2                        S =7,L=7}

#0          #6 #7          #13          {S=0, L=7; S=1, L=6
Beam 1     Beam 2                        S =7,L=7; S=8,L=6}

FIG. 4

510

500

eNodeB

FIG. 5

S601

Confirming the GAP duration beamGap for beam switching, where the unit is the quantity of symbols

S602

Determining the corresponding capability of the beam switching GAP when scheduling different data

S603

The base station indicates whether the scheduled data includes a GAP through one bit in the DCI when scheduling the data

S604

The UE receives data according to the DCI indication

FIG. 6

Beam switching symbol

PDSCH symbol

DCI: S=7,L=7;
**Beam_switch_ind=0**

#7  #8

Beam 1    #13

DCI: S=7,L=7;
**Beam_switch_ind=0**

#7    #9

Beam 1    #13

FIG. 7

DCI: k0=0,S=5,L=9;

#5    #8

d    #13

DCI: k0=0,S=8,L=2;

#8

#13

FIG. 8

EP 4 192 163 A1

DCI: k0=0,S=8,L=6;

FIG. 9

↑ Uplink symbol  ↓ Downlink symbol

DCI: S=8,L=6;PDSCH scheduling

DCI: S=2,L=4 ： PUSCH scheduling

FIG. 10

36

S1101

Confirming the GAP duration beamGap for uplink beam switching, where the unit is the quantity of symbols

S1102

Determining the corresponding capability of the beam switching GAP when scheduling different uplink data

S1103

The base station indicates whether the scheduled data includes a GAP and the beam switching position through 2 bits carried in the DCI when scheduling the data

S1104

The UE receives data according to the DCI indication

FIG. 11

Beam switching symbol

DCI: S=7,L=7;
**Beam_switch_ind=00**

PDSCH symbol

|#7   #8

Beam 1          #13

DCI: S=7,L=7;
**Beam_switch_ind=10**

|#7        #9

Beam 1          #13

FIG. 12

S1301

Indicating to a UE whether scheduled data includes a beam switching time interval GAP through indication information carried in DCI, or making an agreement with the UE to determine whether the scheduled data includes the GAP through a scheduling condition

S1302

Determining the GAP according to a UE switching capability parameter agreed by an interface protocol when determining that the GAP is included

S1303

Transmitting valid scheduled data on a beam after the GAP

FIG. 13

S1401

Determining whether scheduled data includes a beam switching time interval GAP through indication information carried in received DCI or through a scheduling condition agreed with a base station

S1402

Determining the GAP according to a UE switching capability parameter agreed by an interface protocol when determining that the GAP is included

S1403

Transmitting valid scheduled data on a beam after the GAP

FIG. 14

1502

1501

| Processor | | Memory |

1504

1503

| Bus interface | | Transceiver |

FIG. 15

1602

1601

| Processor | | Memory |

1604

1603

| Bus interface | | Transceiver |

FIG. 16

1701

1702

1703

| Indication determining unit | GAP determining unit | Data transmission unit |

FIG. 17

FIG. 18

## INTERNATIONAL SEARCH REPORT

| International application No. |
|---|
| **PCT/CN2021/106846** |

**A. CLASSIFICATION OF SUBJECT MATTER**

H04W 72/04(2009.01)i; H04W 72/12(2009.01)i; H04L 5/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; CNKI; 3GPP: 王俊伟, 大唐, 波束, 切换, 转换, 保护, 间隔, 调度, 下行
控制信息, 能力, 开销, beam, handover, switch, guard, period, GAP, GP, schedule, DCI, ability, overhead

**C. DOCUMENTS CONSIDERED TO BE RELEVANT**

| Category* | Citation of document, with indication, where appropriate, of the relevant passages | Relevant to claim No. |
|---|---|---|
| X | CN 110933749 A (CHENGDU HUAWEI TECHNOLOGIES CO., LTD.) 27 March 2020 (2020-03-27) description paragraphs [0188]-[0237] | 1-6, 10-15, 19-24, 28-33, 37-39 |
| A | CN 106612559 A (HUAWEI TECHNOLOGIES CO., LTD.) 03 May 2017 (2017-05-03) entire document | 1-39 |
| A | SAMSUNG. ""RAN1 Impact on Switching Period Between 1Tx and 2Tx for Two Uplink Carriers"" *3GPP TSG RAN WG1 #99, R1-1912439*, 08 November 2019 (2019-11-08), full text, section 2 | 1-39 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 August 2021** | **27 September 2021** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088** <br> **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2021/106846** |

| Patent document cited in search report | | | Publication date (day/month/year) | Patent family member(s) | | | Publication date (day/month/year) |
| --- | --- | --- | --- | --- | --- | --- | --- |
| CN | 110933749 | A | 27 March 2020 | WO | 2020057459 | A1 | 26 March 2020 |
| CN | 106612559 | A | 03 May 2017 | WO | 2017071552 | A1 | 04 May 2017 |
|  |  |  |  | CN | 106612559 | B | 24 December 2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010734682